# FASCICULE DE BREVET EUROPEEN

(11) **EP 2 320 553 B1**
(45) Date de publication et mention de la délivrance du brevet: **14.06.2017**
(21) Numéro de dépôt: 10354063.9
(22) Date de dépôt: 14.10.2010
(51) Int. Cl.: H02M 7/487

(54) **Dispositif convertisseur et alimentation sans interruption équipée d'un tel dispositif**
Stromumwandlungsvorrichtung und unterbrechungsfreie Stromversorgung, die eine solche Vorrichtung umfasst
Converter device and uninterruptible power supply comprising such a device

(30) Priorité: 06.11.2009 FR 0905336
(43) Date de publication de la demande: 11.05.2011
(73) Titulaire: MGE UPS Systems, 38330 Montbonnot-Saint-Martin (FR)
(72) Inventeur: Rizet, Corentin, 38050 Grenoble Cedex 09 (FR); Lacarnoy, Alain, 38050 Grenoble Cedex 09 (FR)
(74) Mandataire: Tripodi, Paul

(56) Documents cités:
- WO-A1-2009/124564
- JP-A- 2005 245 127
- US-A- 5 274 542
- US-A1- 2005 041 440
- US-A1- 2006 176 719
- US-B1- 6 353 547

## Description

### DOMAINE TECHNIQUE DE L'INVENTION

L'invention relève du domaine des convertisseurs tels que des onduleurs, par exemple ceux utilisés dans les alimentations sans interruption, en particulier dans les alimentations sans interruption de forte puissance, c'est-à-dire dont la puissance est généralement comprise entre environ 100 et 500 kVA.

L'invention concerne plus particulièrement un dispositif convertisseur permettant de fournir une tension et un courant alternatifs par filtrage d'impulsions obtenues sur une sortie de signal modulé à partir de trois tensions sensiblement continues disponibles sur une ligne de tension de référence et sur deux entrées de tension de signes opposés, ledit dispositif comprenant deux unités de commutation connectées entre ladite ligne de tension de référence et respectivement l'une et l'autre des dites entrées, chaque unité de commutation comprenant des premiers moyens de commutation connectés entre l'entrée à laquelle ladite unité de commutation est connectée et une sortie de commutation de ladite unité de commutation pour fournir des impulsions ayant un même signe que celui de la tension disponible sur ladite entrée par conductions et blocages principaux desdits premiers moyens de commutation, ledit dispositif comprenant pour chaque unité de commutation des seconds moyens de commutation associés à ladite unité de commutation et connectés entre ladite unité de commutation et ladite sortie de signal modulé, et des premiers moyens de commande agissant sur lesdits seconds moyens de commutation pour établir une conduction desdits seconds moyens de commutation lorsque le signe de ladite tension alternative est le même que celui de la tension sur l'entrée à laquelle ladite unité de commutation est connectée.

L'invention concerne également une alimentation sans interruption comprenant une entrée d'alimentation sur laquelle est appliquée une tension d'entrée alternative, un redresseur connecté à ladite entrée, deux lignes de tension sensiblement continue de signes opposés connectées en sortie dudit redresseur, un onduleur connecté aux dites lignes de tension de tension sensiblement continue et comportant une sortie destinée à fournir une tension sécurisée.

### ÉTAT DE LA TECHNIQUE

Les alimentations sans interruption sont développées pour améliorer leur rendement et pour réduire les nuisances sonores engendrées par des fréquences de découpage souvent basses, de l'ordre de quelques milliers d'hertz. Dans ce contexte, il a été montré qu'il était intéressant d'utiliser des alimentations sans interruption présentant des topologies sur plusieurs niveaux, généralement trois niveaux, en utilisant des composants plus performants permettant d'améliorer les problèmes évoqués ci-dessus. Des dispositifs avec des topologies à plusieurs niveaux sont décrits dans les documents WO2009/124564, US5274542 et US6353547. Le document US5274542 divulgue un dispositif convertisseur selon le préambule de la revendication 1.

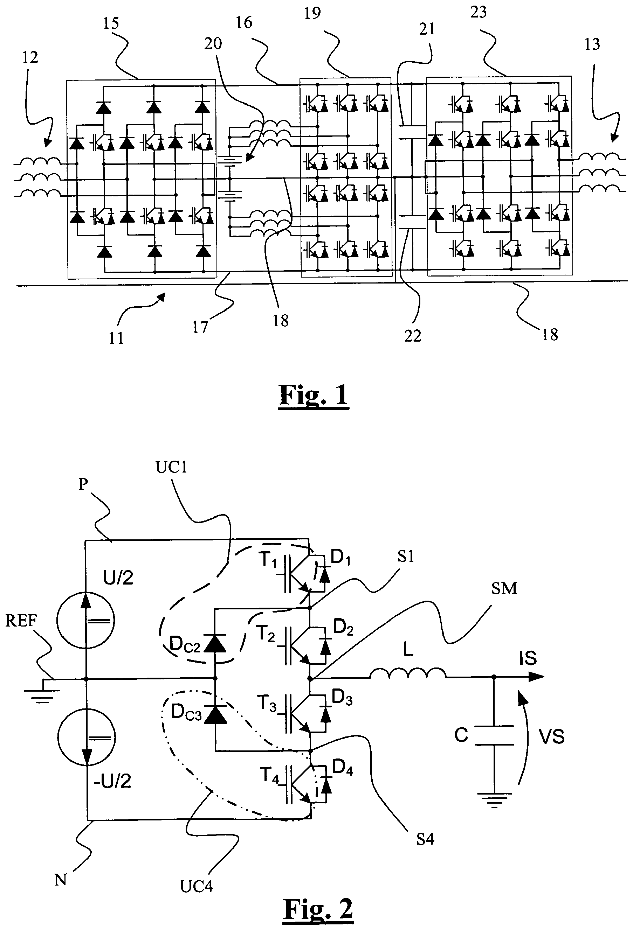

En référence à la figure 1, une telle alimentation sans interruption 11 comprend une entrée réseau 12 à laquelle est connecté un réseau électrique d'alimentation et permettant d'appliquer à ladite alimentation sans interruption 11 une tension d'entrée variable le plus souvent alternative. L'alimentation sans interruption comprend également une sortie réseau 13 à laquelle sont connectées des charges et permettant de fournir une alimentation électrique dite secourue, c'est-à-dire une alimentation électrique pour laquelle la tension et la fréquence sont maîtrisées. L'alimentation sans interruption 11 comprend un redresseur ou un convertisseur AC/DC 15 connecté à l'entrée réseau 12, des lignes 16, 17 de tensions sensiblement continues, et une référence de tension 18 connectée en sortie du redresseur. L'alimentation sans interruption 11 comprend également un convertisseur DC/DC 19 comprenant des moyens de stockage d'énergie électrique 20, ledit convertisseur et lesdits moyens de stockage étant connectés aux lignes 16, 17 de tension sensiblement continue. L'alimentation sans interruption 11 comprend en outre des condensateurs de découplage 21, 22 connectés entre la référence de tension 18 et les lignes 16, 17 de tension sensiblement continue, ainsi qu'un onduleur ou convertisseur DC/AC réversible 23 connecté entre lesdites lignes 16, 17 et la sortie réseau 13. Le convertisseur 23 de l'alimentation sans interruption 11, comprend six cellules de commutation. Plus précisément, le convertisseur 23 comporte deux cellules de commutation pour chacune des trois phases, l'un dédié aux alternances positives et l'autre dédié aux alternances négatives. Comme cela est visible à la figure 1, l'alimentation sans interruption 11 présente une topologie sur trois niveaux, c'est-à-dire que le redresseur 15 fournit une tension sensiblement continue sur trois niveaux, à savoir un niveau positif sur la ligne 16, un niveau négatif sur la ligne 17 et un niveau de référence sur la référence de tension 18. Parallèlement, le convertisseur DC/AC 23 fournit une tension alternative à partir de ces trois niveaux de tension continue. Les niveaux positif et négatif présentent généralement un même potentiel électrique en valeur absolue sensiblement égal à la moitié de la tension U entre les lignes 16 et 17.

En référence à la figure 2, deux cellules du convertisseur DC/AC 23 ont été représentés pour une phase donnée. Le dispositif convertisseur ainsi partiellement représenté permet de fournir une tension VS et un courant IS alternatifs sur une ligne de phase. La tension VS et le courant IS alternatifs sont obtenus par filtrage d'impulsions obtenues sur une sortie de signal modulé SM à partir de trois niveaux de tensions sensiblement continues -U/2, UREF, U/2 disponibles sur une ligne de tension de référence REF et sur deux entrées de tension P, N de signes opposés. Les moyens de filtrage utilisés comportent une inductance L connectée entre la sortie de signal modulé SM et la sortie de tension VS et de courant IS alternatifs. Les moyens de filtrage comportent en outre un condensateur C connecté entre ladite sortie de tension VS et de courant IS alternatifs et un point de référence de tension présentant un même potentiel électrique que la ligne de tension de référence REF.

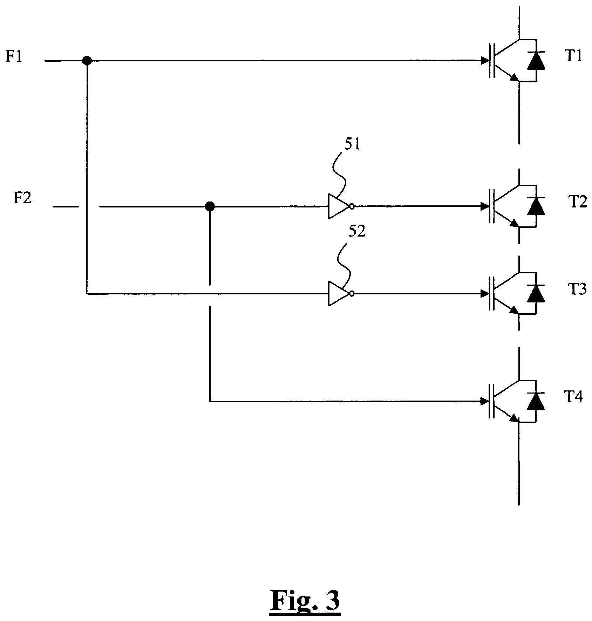

Le dispositif convertisseur représenté à la figure 2 comprend deux unités de commutation UC1, UC4 commandées par l'entremise d'une unité de commande CD1 représentée séparément à la figure 3. Les unités de commutation UC1, UC4 sont connectées entre la ligne de tension de référence REF et respectivement l'une et l'autre des dites entrées P, N. Chaque unité de commutation UC1, UC4 comprend des premiers moyens de commutation, en l'occurrence un transistor T1, T4, connecté entre l'entrée de tension P, N à laquelle ladite unité de commutation est connectée et une sortie de commutation S1, S4 de ladite unité de commutation. Les transistors T1, T4 peuvent être également appelés transistors principaux. Grâce à ce montage, les impulsions sur la sortie de signal modulé SM sont obtenues par une succession de conductions et de blocages principaux des transistors T1, T4 réalisés au moyen de l'unité de commande CD1. Lors de la conduction principale du transistor T1, T4 d'une unité de commutation UC1, UC4, la tension sur la sortie de commutation S1, S4 de ladite unité de commutation est égale à la tension continue -U/2, U/2 de l'entrée de tension P, N à laquelle ladite unité de commutation est connectée. Chaque unité de commutation UC1, UC4 comprend, en outre, une diode DC2, DC3 connectée entre la ligne de tension de référence REF et la sortie de commutation S1, S4 de ladite unité de commutation, pour établir sur ladite sortie de commutation, lors du blocage principal, une tension égale à ladite tension de référence UREF. De cette façon, les transistors T1, T4 de chaque unité de commutation UC1, UC4 permettent de fournir, sur leurs sorties de commutation S1, S4 respectives, des impulsions ayant un même signe que celui de la tension disponible sur l'entrée de tension P, N de ladite unité de commutation.

Comme cela est visible sur la figure 3, les transistors T1, T4 sont commandés à partir des signaux de commande F1, F2. Ces derniers sont obtenus à partir de la tension alternative VS en utilisant les techniques bien connues de modulation de largeur d'impulsion.

Plus précisément, le signal de commande F1, respectivement F2 est appliqué à l'entrée de commande du transistor T1, respectivement T4. Lorsque l'amplitude du signal de commande F1, F2 appliqué sur l'entrée de commande d'un transistor T1, T4 est égale à zéro, ledit transistor est bloqué, et lorsque cette amplitude est égale à l'unité, ledit transistor conduit. Lorsque la tension alternative VS est positive, respectivement négative, la conduction principale du transistor T1, respectivement T4, permet de fournir sur la sortie de commutation S1, respectivement S4, une tension dont l'amplitude est égale à la tension continue position +U/2, respectivement négative -U/2. De la même façon, lorsque la tension alternative VS est positive, respectivement négative, le blocage principal du transistor T1, respectivement T4, permet de rendre la diode DC2, respectivement DC4, passante, ce qui permet de fournir sur la sortie de commutation S1, respectivement S4, une tension dont l'amplitude est égale zéro. Cette succession de conductions et de blocages principaux appliqués sur le transistor T1, respectivement T4, permet ainsi d'obtenir sur la sortie de commutation S1, respectivement S4, des impulsions de largeur variable ayant une amplitude sensiblement égale à la tension continue U/2 et ayant un signe positif, respectivement négatif.

Le dispositif de conversion représenté à la figure 2 comprend, en outre, pour chaque unité de commutation UC1, UC4, des seconds moyens de commutation, en l'occurrence des transistors T2, T3 connectés entre ladite unité de commutation et la sortie de signal modulé SM. Les transistors T2, T3 permettent de connecter l'unité de commutation UC1, UC4 à la sortie de signal modulé SM en fonction du signe de la tension alternative VS, en l'occurrence de connecter la sortie de commutation S1, S4 de ladite unité de commutation UC1, UC4 à la sortie de signal modulé SM.

Comme cela est visible à la figure 3, le signal de commande F1, respectivement F2 est inversé à l'aide de premiers moyens de commande, en l'occurrence un inverseur 52, respectivement 51. Le signal en sortie de l'inverseur 52, respectivement 51, est appliqué à l'entrée de commande du transistor T3, respectivement T2. Lorsque la tension alternative VS est positive, respectivement négative, le signal de commande F2, respectivement F1, est égal à zéro et le signal en sortie de l'inverseur 51, respectivement 52, est donc égal à l'unité. Il s'ensuit que lorsque la tension alternative VS est positive, le transistor T2 conduit, de sorte que la sortie de commutation S1 de l'unité de commutation UC1 est connectée à la sortie de signal modulé SM. De la même façon, lorsque la tension alternative VS est négative, c'est le transistor T3 qui conduit, de sorte que la sortie de commutation S4 de l'unité de commutation UC4 est connectée à la sortie de signal modulé SM. Grâce à ces premiers moyens de commande 51, 52, il est possible de fournir sur la sortie de signal modulé SM, des impulsions de largeur variable ayant une amplitude sensiblement égale à la tension continue U/2 et ayant un signe identique au signe de la tension alternative VS. En d'autres termes, les premiers moyens de commande 51, 52 permettent de connecter la sortie de commutation S1, S4 de l'unité de commutation UC1, UC4 à la sortie de signal modulé SM lorsque le signe de la tension alternative VS est le même que celui de la tension disponible sur l'entrée de tension de ladite unité de commutation. Le filtrage consécutif de ces impulsions sur la sortie de signal modulé SM, aux moyens de l'inductance L et de la capacité C, permet ainsi de fournir la tension alternative VS.

Comme cela est décrit précédemment, le dispositif convertisseur représenté à la figure 2 permet un fonctionnement pendant les phases actives, c'est-à-dire lorsque la tension VS et le courant IS alternatifs sont de même signe. Pendant les phases actives, les impulsions de tension sur les sorties de commutation S1, S4 sont donc obtenues à l'aide des unités de commutation UC1, UC4 décrites précédemment. Ce même dispositif convertisseur comprend également des moyens supplémentaires décrits ci-après permettant de fonctionner pendant les phases réactives, c'est-à-dire lorsque la tension VS et le courant IS alternatifs sont de signes opposés.

Dans le dispositif convertisseur représenté à la figure 2, les moyens permettant de fonctionner pendant les phases réactives comprennent des diodes référencées D1, D2, D3, D4 montées en parallèles avec les transistors respectivement référencés T1, T2, T3, T4. Plus précisément, chaque diode présente une cathode et une anode connectées respectivement à l'émetteur et au collecteur du transistor en parallèle duquel elle est montée. Ces diodes D1, D2, D3, D4 sont ainsi souvent qualifiées de diodes antiparallèles.

Lorsque la tension alternative VS est positive et que le courant alternatif IS est négatif, la commutation se fait à l'aide, d'une part des seconds moyens de commutation associés à l'unité de commutation UC4, c'est-à-dire le transistor T3, et d'autres part des diodes D1, D2 montées en parallèle des premiers et seconds moyens de commutation associés à la cellule de commutation UC1, c'est-à-dire montées en parallèle des transistors T1 et T2 respectivement. Lorsque la tension alternative VS est négative et que le courant alternatif IS est positif, la commutation se fait à l'aide, d'une part des seconds moyens de commutation associés à l'unité de commutation UC1, c'est-à-dire le transistor T2, et d'autre part des diodes D4, D3 montées en parallèle des premiers et seconds moyens de commutation associés à la l'unité de commutation UC1, c'est-à-dire montées en parallèle des transistors T4 et T3 respectivement.

Plus précisément, lorsque le transistor T3, respectivement T2, conduit, le courant alternatif IS passe par ledit transistor et la diode DC3, respectivement DC2. il s'ensuit que la tension sur la sortie de signal modulé SM est sensiblement égale à la tension de référence REF. Inversement, lorsque le transistor T3, respectivement T2, est bloqué, le courant alternatif IS passe par les diodes D2, D1, respectivement les diodes D3, D4, et il s'ensuit que la tension sur la sortie de signal modulé SM est sensiblement égale à la tension continue U/2, respectivement -U/2.

Ainsi, pendant les phases actives, pour établir des impulsions sur la sortie de signal modulé SM on utilise essentiellement les premiers moyens de commutation T1, T4 des unités de commutation UC1, UC4. Pendant les phases réactives, l'établissement des impulsions sur la sortie de signal modulé SM utilise essentiellement les seconds moyens de commutation T3, T2 associés aux unités de commutation UC4, UC1.

Lors de l'utilisation de l'alimentation sans interruption 11 représentée à la figure 1, notamment du dispositif convertisseur représenté sur les figures 2 et 3, les vitesses de commutation des transistors T1 à T4, et les forts courants y circulant imposent des contraintes structurelles très importantes. Il s'ensuit que les pertes en commutation dans ces composants actifs d'électronique de puissance limitent l'augmentation de la fréquence de découpage. Un problème technique est de limiter ces pertes en commutation pendant les phases actives du fonctionnement du dispositif convertisseur, tout en assurant un bon fonctionnement durant les phases réactives.

### EXPOSÉ DE L'INVENTION

L'invention vise à apporter une solution aux problèmes des dispositifs convertisseurs de l'art antérieur en proposant un dispositif convertisseur permettant de fournir une tension et un courant alternatifs par filtrage d'impulsions obtenues sur une sortie de signal modulé à partir de trois tensions sensiblement continues disponibles sur une ligne de tension de référence et sur deux entrées de tension de signes opposés, ledit dispositif comprenant deux unités de commutation connectées entre ladite ligne de tension de référence et respectivement l'une et l'autre des dites entrées, chaque unité de commutation comprenant des premiers moyens de commutation connectés entre l'entrée à laquelle ladite unité de commutation est connectée et une sortie de commutation de ladite unité de commutation pour fournir des impulsions ayant un même signe que celui de la tension disponible sur ladite entrée par conductions et blocages principaux desdits premiers moyens de commutation, ledit dispositif comprenant pour chaque unité de commutation des seconds moyens de commutation associés à ladite unité de commutation et connectés entre ladite unité de commutation et ladite sortie de signal modulé, et des premiers moyens de commande agissant sur lesdits seconds moyens de commutation pour établir une conduction desdits seconds moyens de commutation lorsque le signe de ladite tension alternative est le même que celui de la tension sur l'entrée à laquelle ladite unité de commutation est connectée, ledit dispositif étant caractérisé en ce qu'il comprend pour chaque unité de commutation un circuit d'aide à la commutation de ladite unité de commutation connecté entre l'entrée à laquelle ladite unité de commutation est connectée et la sortie de commutation de ladite unité de commutation pour établir, avant toute conduction principale des premiers moyens de commutation de ladite unité de commutation, une tension de commutation desdits premiers moyens de commutation sensiblement égale à zéro, et en ce que ledit dispositif comprend pour chaque unité de commutation des seconds moyens de commande agissant sur les seconds moyens de commutation associés à l'unité de commutation qui est connectée à l'entrée de tension de même signe que celui de ladite tension alternative pour établir, lorsque ladite tension alternative et ledit courant alternatif sont de signes opposés, un blocage desdits seconds moyens de commutation.

Un dispositif selon l'invention est défini dans les revendications.

L'invention concerne également une alimentation sans interruption comprenant une entrée d'alimentation sur laquelle est appliquée une tension d'entrée alternative, un redresseur connecté à ladite entrée, deux lignes de tension sensiblement continue de signes opposés connectées en sortie dudit redresseur, un onduleur connecté aux dites lignes de tension de tension sensiblement continue et comportant une sortie destinée à fournir une tension sécurisée, ladite alimentation étant caractérisée en ce que ledit onduleur est un dispositif convertisseur tel que celui décrit précédemment et fournit à partir des tensions sensiblement continues une tension sécurisée alternative.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente une alimentation sans interruption selon l'art antérieur.
La figure 2 représente un dispositif convertisseur d'une tension continue en tension alternative selon l'art antérieur
La figure 3 représente l'unité de commande du dispositif convertisseur représenté à la figure 2.

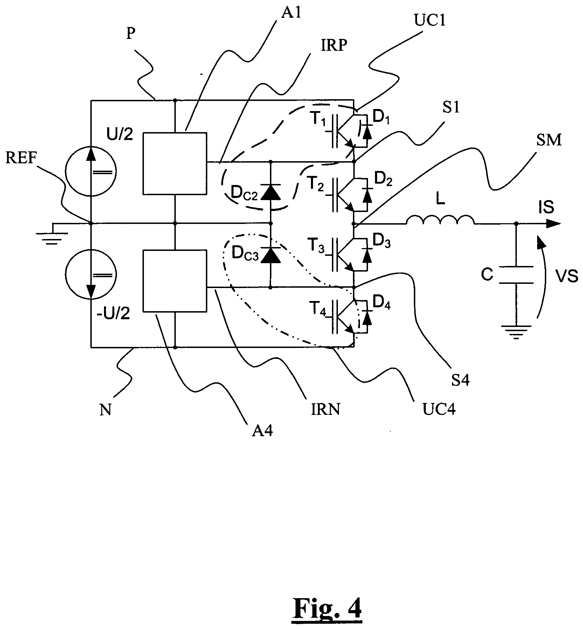

La figure 4 représente schématiquement un dispositif convertisseur selon l'invention.

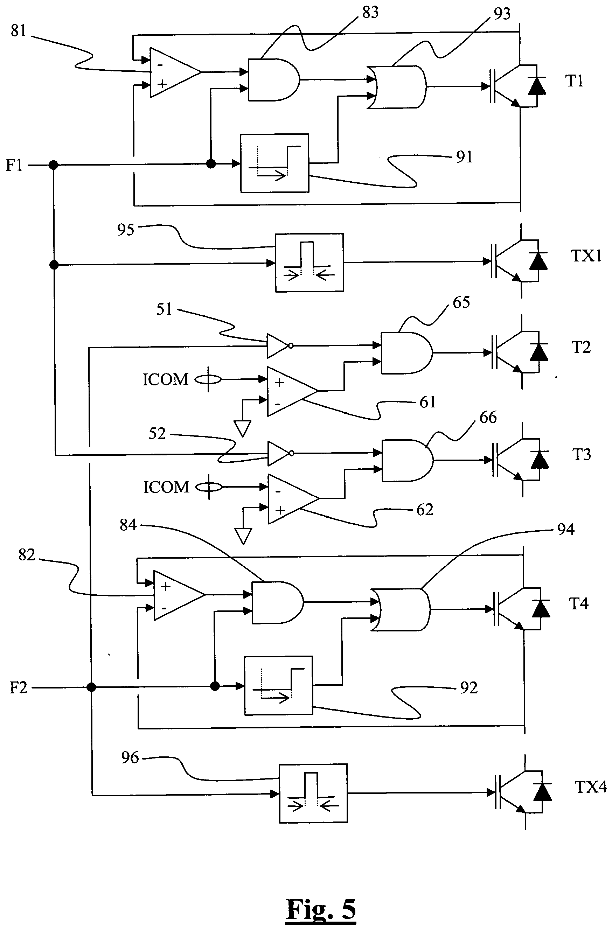

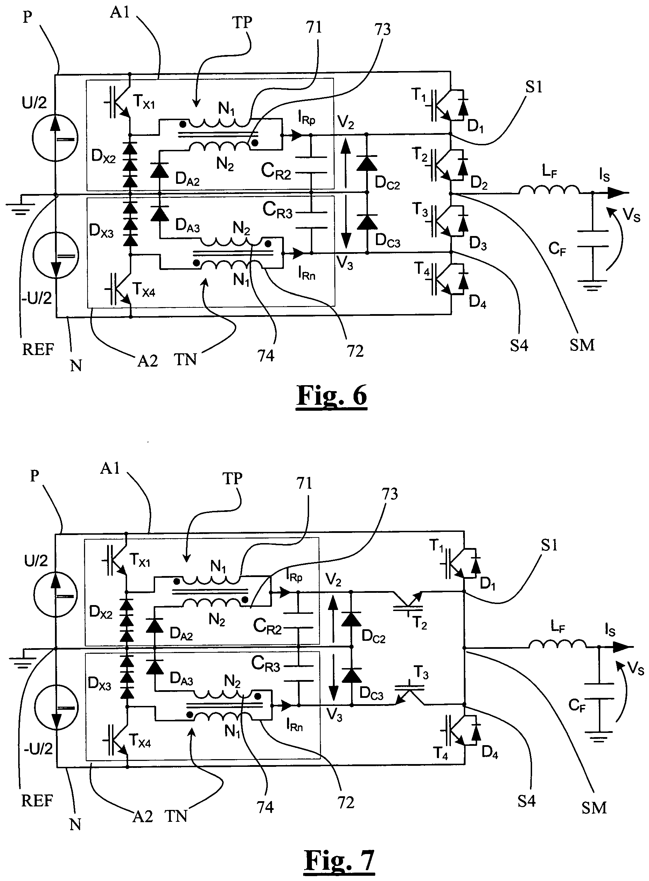

La figure 5 représente l'unité de commande pouvant être mise en oeuvre sur le dispositif convertisseur représenté sur la figure 4, ainsi que sur les dispositifs convertisseurs représentés sur les figures 6 et 7.
La figure 6 représente un mode de réalisation d'un dispositif convertisseur selon l'invention utilisant l'unité de commande représentée sur la figure 5.
La figure 7 représente un autre mode de réalisation d'un dispositif convertisseur selon l'invention utilisant l'unité de commande représentée sur la figure 5.

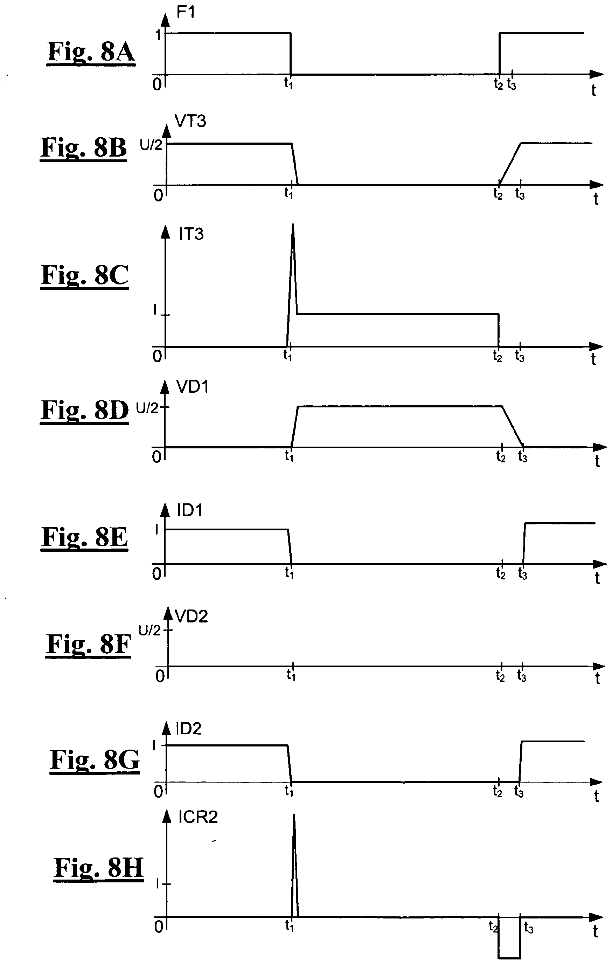

Les figures 8A à 8H sont des chronogrammes illustrant le fonctionnement du dispositif convertisseur représenté à la figure 6 ou 7, lorsque la tension et le courant alternatif sont de signes opposés, et dans le cas particulier où une unité de commande selon l'art antérieur telle que représentée à la figure 3 est utilisée.

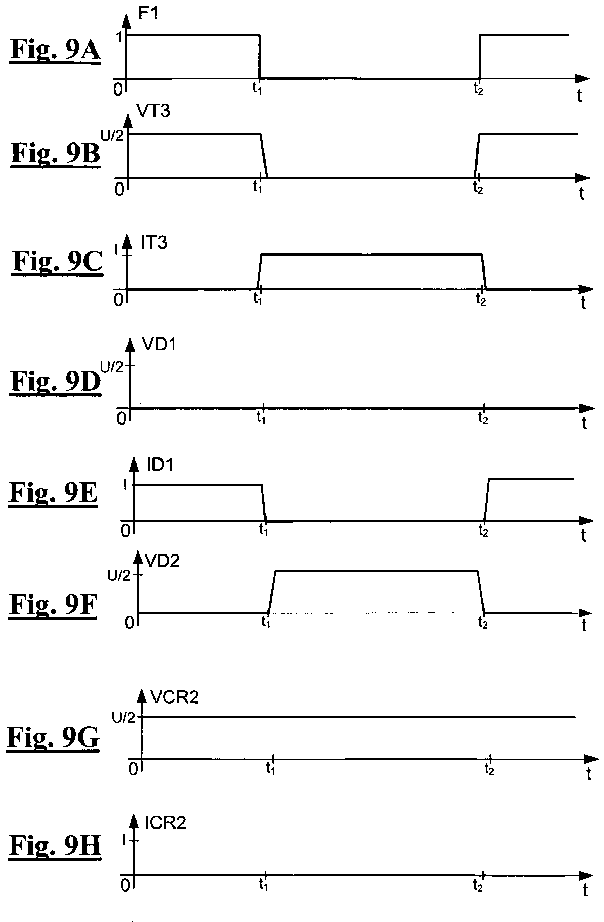

Les figures 9A à 9H sont des chronogrammes illustrant le fonctionnement du dispositif convertisseur représenté à la figure 6 ou 7 avec une unité de commande selon l'invention telle que représentée à la figure 5, et lorsque la tension et le courant alternatif sont de signes opposés.

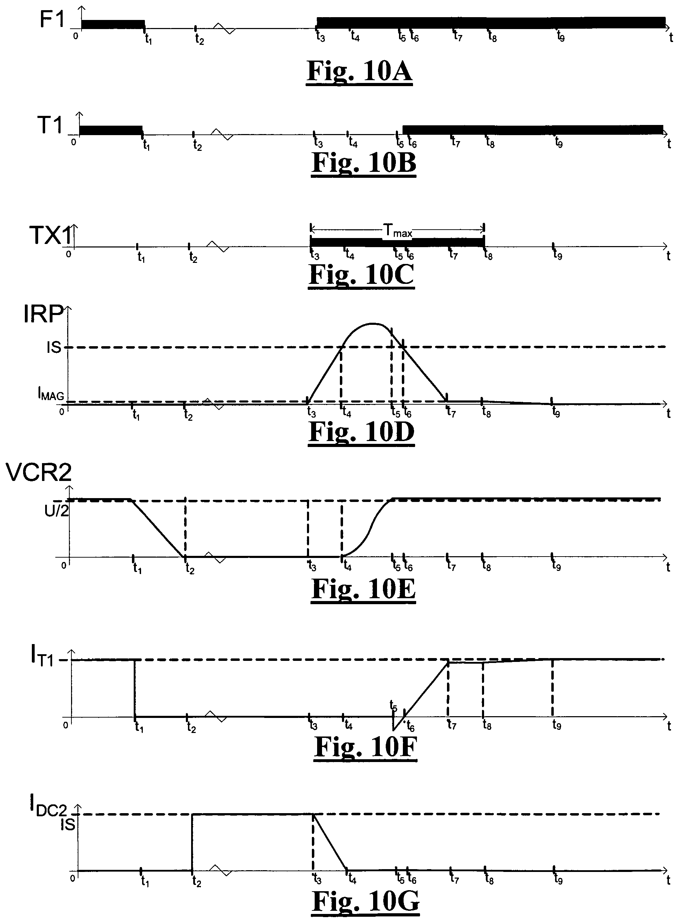

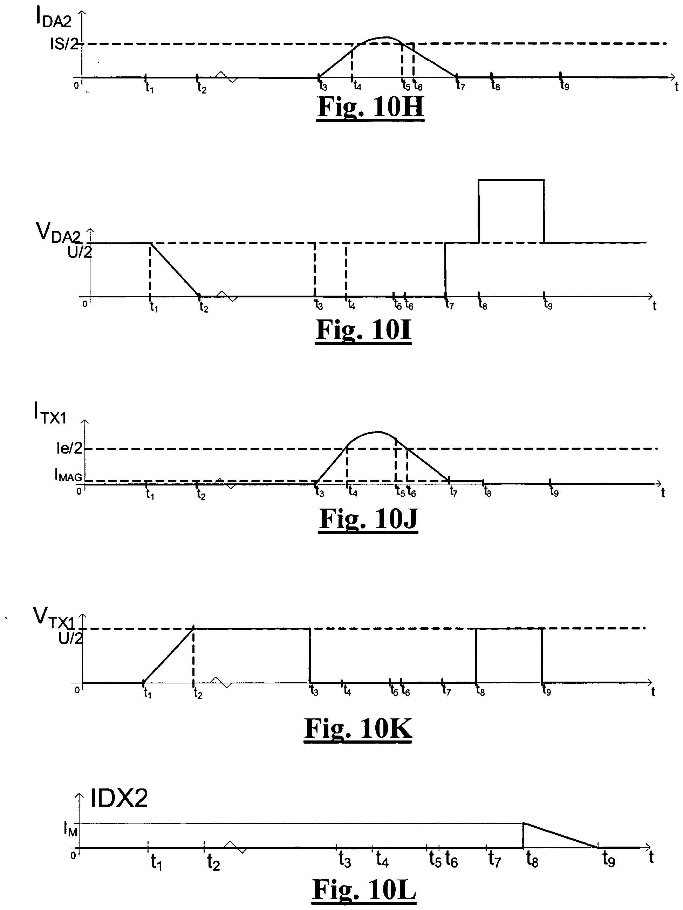

Les figures 10A à 10L sont des chronogrammes illustrant le fonctionnement du dispositif convertisseur selon l'invention représenté à la figure 6 ou 7 lorsque la tension et le courant alternatif sont de même signe.

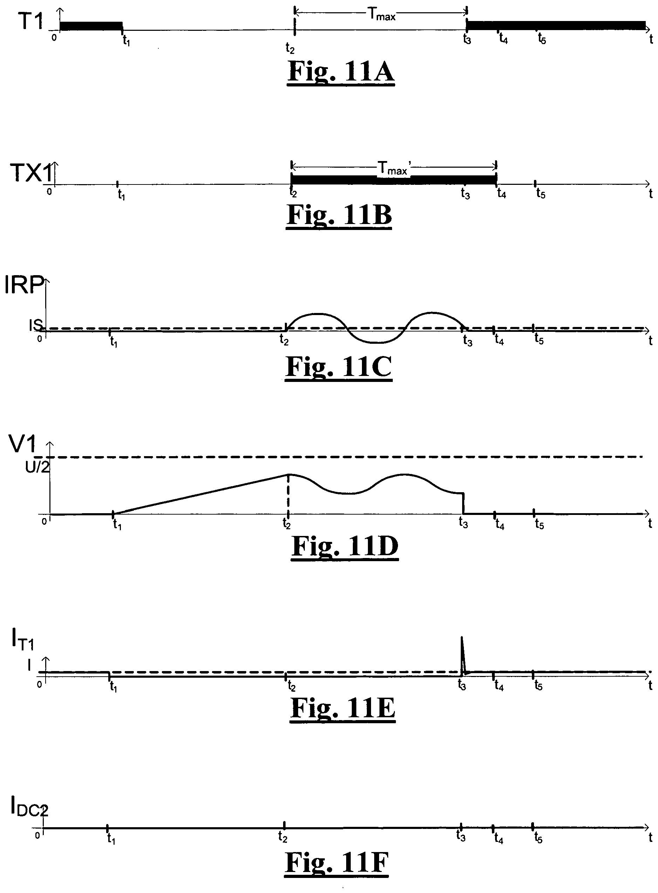

Les figures 11A à 11K sont des chronogrammes illustrant le fonctionnement en mode redresseur du dispositif convertisseur selon l'invention représenté à la figure 6 ou 7, lorsque la tension et le courant alternatif sont de même signe, en début et en fin d'une alternance de ladite tension alternative.

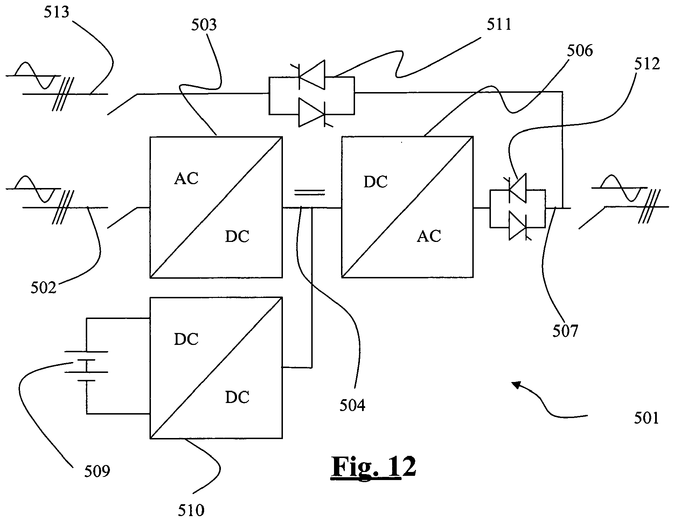

La figure 12 représente une alimentation sans interruption selon l'invention.

### DESCRIPTION DETAILLEE D'UN MODE DE RÉALISATION

En référence à la figure 4, le dispositif convertisseur comprend, un grand nombre d'éléments déjà décrits précédemment et qui se retrouvent sous les mêmes références. Le dispositif convertisseur comprend, en outre, pour chaque unité de commutation UC1, UC4, un circuit d'aide à la commutation A1, A4 de ladite unité de commutation connecté entre l'entrée de tension P, N à laquelle ladite unité de commutation est connectée et la sortie de commutation S1, S4 de ladite unité de commutation. Ces circuits d'aide à la commutation A1, A4 de chaque unité de commutation UC1, UC4 permettent d'établir, avant la conduction principale, une tension de commutation des premiers moyens de commutation T1, T4 de ladite unité de commutation sensiblement égale à zéro.

Dans ce qui suit, la conduction de moyens de commutation pourra également être qualifiée d'amorçage desdits moyens de commutation. Le terme « principal », associé aux termes conduction, amorçage ou blocage, peut être utilisé en référence des commutations des premiers moyens de commutation T1, T4 avec lesquels les circuits d'aide à la commutation interagissent pour adoucir les commutations. Le terme « principal » permet également de distinguer les commutations des premiers moyens de commutation T1, T4 par rapports à celles des seconds moyens de commutation T2, T3 ou celles des moyens de commutation auxiliaires TX1, TX4.

Généralement, pour établir des impulsions sur la sortie de signal modulé SM, les commutations entraînant des pertes dans les seconds moyens de commutation T2, T3 sont moins fréquentes que les commutations des premiers moyens de commutation T1, T4. Les circuits d'aide à la commutation sont donc généralement conçus pour établir une tension de commutation sensiblement égale à zéro uniquement pour les commutation des premiers moyens de commutations T1, T4, c'est à dire pendant les phases actives de fonctionnement.

Pour établir une tension de commutation sensiblement égale à zéro avant la conduction ou l'amorçage principale, le circuit d'aide à la commutation A1, A4 de l'unité de commutation UC1, UC4 considéré comprend généralement des moyens pour dévier un courant IRP, IRN de la sortie de commutation S1, S4 de ladite unité de commutation et pour établir une résonnance de ce courant. Il se trouve que ces circuits d'aide à la commutation A1, A4, généralement conçus pour les phases actives de fonctionnement, peuvent interagir de manière défavorable avec les seconds moyens de commutation T3, T2, pendant les phases réactives de fonctionnement.

Par exemple, comme cela est décrit ci-après de manière détaillée, les circuits d'aide à la commutation A1, A4 peuvent comporter des moyens d'accumulation d'énergie qui agissent, pendant les phases réactives de fonctionnement, sur le courant circulant dans les seconds moyens de commutation T2, T3. Plus précisément, ces moyens d'accumulation d'énergie sont généralement disposés de sorte que, lors de la conduction des seconds moyens de commutation T2, T3 une décharge desdits moyens d'accumulation d'énergie se produit à travers l'ensemble desdits seconds moyens de commutation, ce qui nécessite un surdimensionnement de ces seconds moyens de commutation et des moyens d'accumulation d'énergie.

Il a été trouvé qu'en modifiant l'unité de commande CD1, il était possible d'utiliser un circuit d'aide à la commutation en évitant tout surdimensionnement des seconds moyens de commutation T2, T3. Pour cela, des seconds moyens de commande décrits plus loin de manière détaillée ont été rajoutés à l'unité de commande CD1 pour agir sur les seconds moyens de commutation T2, T3 associés à l'unité de commutation UC1, UC4 qui est connectée à l'entrée P, N. Ces seconds moyens de commande permettent ainsi d'établir, lorsque la tension alternative VS et le courant alternatif IS sont de signes opposés, c'est-à-dire durant les phases réactives, un blocage des seconds moyens de commutation T2, T3 associés à l'unité de commutation UC1, UC4 qui est connectée à l'entrée de tension de signe opposé par rapport au signe de ladite tension alternative. En d'autres termes, lorsque la tension alternative VS et le courant alternatif IS sont de signes opposés, les seconds moyens de commande agissent sur les seconds moyens de commutation T2, T3 associés à l'unité de commutation UC1, UC4 qui est connectée à l'entrée P, N afin de protéger ladite unité de commutation de la sortie de signal modulé SM.

Une unité de commande modifiée CD2 incluant les seconds moyens de commande est représentée à la figure 5. Comme dans l'unité de commande CD1 représentée sur la figure 3, la commande de chaque unité de commutation est réalisée à l'aide d'un signal de commande F1, F2 à modulation de largeur d'impulsion de ladite unité de commutation. Comme cela a été décrit précédemment, l'amplitude du signal de commande F1, F2 d'une unité de commutation UC1, UC4 est maintenue égale à zéro, lorsque le signe de la tension alternative VS est opposé par rapport au signe de la tension sur l'entrée P, N à laquelle ladite unité de commutation est connectée. En d'autres termes, l'amplitude du signal F1 est maintenue égale à zéro lorsque le signe de la tension alternative VS est négative, et l'amplitude du signal F2 est maintenue égale à zéro lorsque le signe de la tension alternative VS est positive. Comme dans l'unité de commande CD1 représentée sur la figure 3, les premiers moyens de commande agissant sur les seconds moyens de commutation T2, T3 associés à l'une des unités de commutation UC1, UC4 comporte un inverseur 51, 52 connecté entre l'entrée de commande desdits seconds moyens de commutation et un point d'entrée du signal de commande F2, F1 de l'autre unité de commutation UC4, UC1.

L'unité de commande CD2, comprend en outre, pour chaque unité de commutation, des seconds moyens de commande agissant également sur les seconds moyens de commutation T2, T3 associés à l'unité de commutation UC1, UC4 qui est connectée à l'entrée de tension de même signe que celui de la tension alternative VS pour établir, lorsque ladite tension alternative VS et le courant alternatif IS sont de signes opposés, un blocage desdits seconds moyens de commutation. En d'autres termes, les seconds moyens de commande agissent sur les seconds moyens de commutation T2, respectivement T3, associés à l'unité de commutation UC1, respectivement UC4 pour établir, lorsque le courant alternatif IS est négatif, respectivement positif, un blocage desdits seconds moyens de commutations.

Les seconds moyens de commande agissant sur les seconds moyens de commutation T2, T3 associés à une première unité de commutation UC1, UC4 comportent entre l'entrée de commande desdits seconds moyens de commutation T2, T3 et le point d'entrée du signal de commande F2, F1 de l'autre unité de commutation UC4, UC1:
- des moyens de test 61, 62 du signe du courant alternatif IS par rapport à celui de la tension sur l'entrée P, N à laquelle ladite première unité de commutation UC1, UC4 est connectée, et
- un opérateur booléen « ET » logique 65, 66 pourvu de deux entrées connectées à une sortie de l'inverseur 51 des premiers moyens de commande desdits seconds moyens de commutation T2, T3 et à une sortie desdits moyens de test 61, 62, et d'une sortie pour établir un blocage desdits seconds moyens de commutation lorsque ledit courant alternatif IS est signe opposé par rapport à celui de la tension sur l'entrée à laquelle ladite première unité de commutation est connectée.

Un exemple de circuit d'aide à la commutation A1, A4 pouvant être mis en oeuvre pour chaque unité de commutation UC1, UC4 est représenté à la figure 6. Le dispositif convertisseur représenté à la figure 6 comporte un certain nombre des éléments déjà décrits précédemment et indiqués par les mêmes références. Comme sur les figures 2 et 4, seulement les deux unités de commutation associées à l'une des trois phases ont été représentées.

En référence à la figure 6, le circuit d'aide à la commutation A1, A4 de chaque unité de commutation UC1, UC4 comporte des moyens inductifs, des moyens de dérivation d'un courant IRP, IRN de la sortie de commutation S1, S4 pour dériver ledit courant vers lesdits moyens inductifs avant l'amorçage principal, et un condensateur C2, C3 montés en parallèle sur la diode DC2, DC3 de ladite unité de commutation pour établir une résonnance dudit courant IRP, IRN dans lesdits moyens inductifs avant l'amorçage principal.

Les moyens inductifs du circuit d'aide à la commutation A1, A4 de chaque unité de commutation UC1, UC4 sont essentiellement constitués par un transformateur TP, TN connecté à la sortie de commutation S1, S4 de ladite unité de commutation et comportant des enroulements bobinés en inverse. En d'autres termes, les deux enroulements du transformateur sont directement connectés à la sortie de commutation S1, S4. Dans le dispositif convertisseur représenté à la figure 6, le transformateur TP, TN est directement connecté à la sortie de commutation S1, S4 de ladite unité de commutation. Du fait que les moyens inductifs de chaque circuit d'aide à la commutation A1, A4 soient essentiellement constitués par un transformateur, et que ce dernier soit directement connecté à la sortie de commutation S1, S4, la topologie du dispositif convertisseur et de ses circuits d'aide à la commutation s'en trouve simplifiée.

Les moyens de dérivation du circuit d'aide à la commutation A1, A4 de chaque unité de commutation UC1, UC4 comportent, quant à eux, des moyens de commutation auxiliaires, en l'occurrence des transistors auxiliaires TX1, TX4, directement connectés entre le transformateur TP, TN et l'entrée de tension P, N à laquelle ladite unité de commutation est connectée. Par directement connecté, on entend que les moyens de connexion entre le transistor auxiliaire et l'entrée de tension P, N, et entre ce même transistor auxiliaire et le transformateur TP, TN, sont essentiellement constitués par des conducteurs électriques. Les transistors auxiliaires TX1, TX4 participent à l'établissement, avant l'amorçage principal, d'une dérivation du courant alternatif IS dans le transformateur TP, TN.

Plus précisément, le transformateur TP, TN du circuit d'aide à la commutation A1, A4 de chaque unité de commutation UC1, UC4 comporte un premier enroulement 71, 72 connecté entre la sortie de commutation S1, S4 de ladite unité de commutation et les moyens de dérivation TX1, TX4 dudit circuit d'aide à la commutation. Le transformateur TP, TN comporte un second enroulement 73, 74 couplé magnétiquement au premier enroulement 71, 72 et connecté entre la sortie de commutation S1, S4 et la ligne de tension de référence REF via la diode DA2, DA3. Par ailleurs, ce second enroulement 73, 74 est bobiné en inverse par rapport au premier enroulement 71, 72.

Cette configuration du transformateur TP, TN permet, lorsque les transistors auxiliaires TX1, TX4 sont amorcés, de dévier plus de courant dans chacun des enroulements du transformateur TP, TN. En effet, grâce au bobinage inversé des enroulements et à la connexion des extrémités contigües desdits enroulements à l'entrée d'alimentation, le courant alternatif IS est dévié pour être partagé dans chacun des enroulements. Ainsi le courant d'entrée IRP, IRN est amplifié par induction mutuelle. Ceci permet une réduction du calibre en courant du transistor auxiliaire TX1, TX4. Après le blocage de la diode DC2, DC3, la tension V2, V3 aux bornes du transistor principal T1, T4 décroit jusqu'à une valeur sensiblement égale à zéro, et la diode D1, D4 devient passante, ce qui permet d'amorcer ledit transistor principal sous une tension nulle.

Dans le mode de réalisation représenté sur la figure 6, le circuit d'aide à la commutation A1, A4 de chaque unité de commutation UC1, UC4 comporte une première diode anti-retour DX2, DX3 connectée entre le premier enroulement 71, 72 et la ligne de tension de référence REF. Lorsque le transistor auxiliaire TX1, TX4 est bloqué, cette diode DX2, DX3 permet le passage du courant dans le premier enroulement 71, 72 dans un seul sens. Cette diode permet également de limiter la tension aux bornes du transistor auxiliaire TX1, TX4.

Dans le mode de réalisation représenté sur la figure 6, le circuit d'aide à la commutation A1, A4 de chaque unité de commutation UC1, UC4 comporte, en outre, une seconde diode anti-retour DA2, DA3 connectée entre le second enroulement 73, 74 et la ligne de tension de référence REF. Cette diode permet le passage du courant dans un seul sens dans ce second enroulement. La présence de ces diodes DA2, DA3 empêche tout fonctionnement réversible des circuits d'aide à la commutation, et permet la démagnétisation du transformateur TP, TN. Ce fonctionnement unidirectionnel du circuit d'aide à la commutation A1, A4 est intéressant puisqu'il limite le temps de fonctionnement dudit circuit d'aide à la commutation A1, A4 et donc limite les pertes dans ledit circuit.

Cette configuration du circuit d'aide à la commutation A1, A4 permet, une fois que le transistor principal T1, T4 est amorcé, de démagnétiser le transformateur TP, TN, c'est-à-dire qu'aucun courant ne circule plus dans les enroulements du transformateur. Ceci permet d'éviter une accumulation d'énergie dans le transformateur qui finirait par détruire le dispositif convertisseur. Cette démagnétisation est rendue possible grâce à la diode DX2, DX3, qui permet d'appliquer la tension de référence sur l'enroulement 71, 72, lorsque le transistor auxiliaire TX1, TX4 est bloqué et lorsque ladite diode devient passante, et grâce à la diode DA2, DA3 qui supporte la tension répercutée sur l'enroulement 73, 74.

Le transformateur TP, TN présente généralement des fuites magnétiques sur chacun des enroulements que l'on ne peut généralement pas négliger. On peut ainsi définir une inductance équivalente créée par les fuites et lier cette inductance à une inductance de résonance équivalente. Cette inductance de résonance détermine la pente de montée et de descente du courant dans les enroulements du transformateur. Avantageusement, le transformateur TP, TN comporte une matière électriquement isolante séparant les enroulements. Un choix de l'épaisseur de cette matière isolante permet, entre autres, de régler l'inductance de fuite du transformateur et donc la pente du courant.

Le rapport cyclique pour générer les signaux de commande F1, F2 est généralement choisi en prenant en compte le temps de démagnétisation du transformateur TP, TN, qui est généralement de l'ordre de la moitié du temps d'amorçage. Ceci permet d'éviter une saturation de ces transformateurs.

Dans le mode de réalisation représenté à la figure 6, les seconds moyens de commutation T2, T3 de chaque unité de commutation UC1, UC4 sont disposés entre la sortie de commutation S1, S4 de ladite unité de commutation et la sortie de signal modulé SM

Dans le mode de réalisation représenté à la figure 7, le dispositif convertisseur comporte un certain nombre des éléments déjà décrits précédemment et indiqués par les mêmes références. Contrairement au dispositif convertisseur de la figure 6, la sortie de commutation S1, S4 de chaque unité de commutation UC1, UC4 est connectée à la sortie de signal modulé SM. De plus, les seconds moyens de commutation T2, T3 de chaque unité de commutation UC1, UC4 sont disposés en série entre la diode DC2, DC3 et la sortie de signal modulé SM. Ce mode de réalisation fonctionne essentiellement de la même façon que celui de la figure 6 en utilisant l'unité de commande CD2 représenté à la figure 5.

Les dispositifs convertisseurs représentés sur les figures 6 ou 7 peuvent généralement être utilisés de manière réversible. En d'autres termes, le dispositif convertisseur peut fonctionner dans un mode redresseur permettant d'obtenir une tension sensiblement continue sur les entrées de tension continue P, N à partir de la tension alternative VS, c'est-à-dire comme un convertisseur AC/DC.

Dans les modes de réalisation représentés sur les figures 6 et 7, le transistor T1, T4 de chaque unité de commutations UC1, UC4 peut être utilisé en mode thyristor dual, c'est-à-dire que l'amorçage se fait de manière naturelle. En général, l'amorçage principal se fait de façon naturelle lorsque la tension de commutation devient sensiblement égale à zéro et que la diode antiparallèle D1, D4 devient passante. Pour cela, l'unité de commande CD2 représentée à la figure 5 comporte un comparateur 81, 82 permettant de détecter le passage par zéro de la tension aux bornes des premiers moyens de commutations T1, T4. La sortie de ce comparateur 81, 82 est connectée à une entrée d'un premier opérateur booléen du type « ET » logique référencé 83, 84. Par opérateur booléen de type « ET » logique, on entend également un produit d'entrées logiques ou un opérateur binaire conjonctif, chacune des dites entrées logiques pouvant être égale à zéro ou à l'unité. Une autre entrée de cet opérateur est connectée au point d'entrée du signal de commande F1, F2. Ainsi, le passage par zéro de la tension aux bornes du transistor T1, T4 et la présence simultanée d'une impulsion du signal de commande F1, F2 permet d'activer la sortie de cet opérateur booléen 83, 84 et d'amorcer le transistor T1, T4.

Cependant, dans le mode redresseur et dans le cas où l'intensité du courant alternatif IS est trop basse, c'est-à-dire pour une amplitude du courant alternatif IS inférieure à environ 10% de sa valeur maximum, ce qui correspond généralement au début ou à la fin de l'alternance dudit courant, la tension sur la sortie de commutation S1, S4 n'a pas le temps d'atteindre la valeur de la tension de ligne P, N visée et l'amorçage naturel des transistors principaux T1, T4 n'est pas possible. En effet, dans ce cas, les condensateurs CR2, CR3 n'ont pas le temps de se charger et il est difficile d'obtenir une résonance du courant entrant dans les moyens inductifs annulant la tension aux bornes des transistors principaux T1, T4.

Pour remédier à cet inconvénient, l'unité de commande CD2 représentée à la figure 5, comportent un module de retard 91, 92 conçu pour forcer un amorçage principal retardé après une durée supérieure à une durée prédéterminée TMAX. Ce mode de fonctionnement forcé est mis en oeuvre dans le mode inverse, principalement lors du début et de la fin de l'alternance de la tension alternative VS, lorsque la valeur du courant alternatif IS n'est pas suffisante pour charger les condensateurs CR2, CR3. La sortie de l'opérateur 83, 84 est connectée à un deuxième opérateur booléen de type « OU » référencé 93, 94 dont la sortie est connectée à l'entrée de commande du transistor principal T1, T4. Par opérateur booléen de type « OU » logique, on entend également un opérateur binaire disjonctif, chacune des dites entrées logiques pouvant être égale à zéro ou à l'unité. Ainsi, en fonctionnement normal, lorsque la sortie de l'opérateur « ET » 83, 84 est activée, la sortie de l'opérateur 93, 94 est également activée, ce qui permet de commander l'amorçage du transistor principal T1, T4 au moment où la tension aux bornes dudit transistor passe par zéro.

L'unité de commande CD2 représentée à la figure 5 comporte, en outre, un module 95, 96 permettant d'amorcer le transistor auxiliaire TX1, TX4 pendant une durée prédéterminée TMAX'. Cette durée court à compter du front montant du signal de commande F1, F2. En fonctionnement normal et pendant cette durée TMAX', le transistor auxiliaire TX1, TX4 peut donc être amorcé, ce qui permet d'annuler la tension de commutation pour amorcer le transistor principal T1, T4.

En référence aux figures 8A à 8H et à titre de comparaison avec le dispositif convertisseur selon l'invention, le fonctionnement du dispositif convertisseur représenté à la figure 6 associé à l'unité de commande CD1 représentée à la figure 3 (art antérieur) est décrit dans ce qui suit, dans le cas où la tension alternative VS est positive et le courant alternatif IS est négatif. Il est à noter que la description de ce fonctionnement s'applique également au dispositif convertisseur représenté à la figure 7.

Tant que le signal de commande F1 est égal à l'unité, le transistor T1 conduit et le transistor T3 est maintenu bloqué grâce à l'inverseur 51. Le courant alternatif IS circule dans les diodes D1 et D2 (figures 8E et 8G). La tension VCR2 aux bornes du condensateur CR2 est quant à elle égale à la tension U/2 sur l'entrée P.

A un temps t1, le signal de commande F1 passe de l'unité à zéro, le transistor T1 est bloqué et le transistor T3 devient passant. Notons que le transistor T2 est maintenu passant pendant toute l'alternance positive grâce à la présence de l'inverseur 52 et du fait que le signal de commande F2 à l'entrée dudit inverseur est maintenue égale à zéro pendant toute l'alternance positive. Il s'ensuit que la tension VCR2 aux bornes du condensateur CR2 s'annule par décharge dudit condensateur CR2 à travers le transistor T2. De ce fait, la valeur du courant IT3 et IT2 circulant dans le transistor T3 et T2 devient très importante (figure 8C) ce qui peut nuire à leur intégrité. Le transistor T2 étant passant pendant toute la durée pendant laquelle le courant alternatif IS est négatif et la tension alternative VS est positive, la tension VD1 aux bornes de D1 est maintenue égale à la tension U/2 sur l'entrée P (figure 8D). C'est donc la diode D1 qui supporte la totalité de la tension U/2 de l'entrée P. Le courant circule donc dans le transistor T3 (figure 8C) et dans la diode DC3.

A un temps t2, le signal de commande F1 passe de zéro à l'unité, le transistor T1 devient passant et le transistor T3 se bloque. Il s'ensuit que le courant est dérivé vers le condensateur CR2 via la diode D2 (figure 8G), ce qui ralentit la montée de la tension VT3 aux bornes du transistor T3 (figure 8B).

A un temps t3, le condensateur CR2 est chargé et présente une tension VCR2 à ses bornes égale à la tension U/2 sur l'entrée P. Le courant alternatif IS circule dans les diodes D1 et D2 (figures 8E et 8G).

En référence aux figures 9A à 9H, le fonctionnement du dispositif convertisseur représenté à la figure 6 associé à l'unité de commande CD2 représentée à la figure 5 est décrit dans ce qui suit, toujours dans le cas où la tension alternative VS est positive et le courant alternatif IS est négatif, c'est-à-dire pendant les phases réactives. Ce fonctionnement est transposable au cas où la tension VS est négative et le courant IS est positif, T2 fonctionnant alors comme T3 dans ce qui suit et inversment. Il est à noter que la description de ce fonctionnement s'applique également au dispositif convertisseur représenté à la figure 7.

Tant que le signal de commande F1 est égal à l'unité, le transistor T1 conduit et le transistor T3 est maintenu bloqué grâce à l'inverseur 51. Le courant alternatif IS circule dans les diodes D1 et D2 (figures 9E). La tension VCR2 aux bornes du condensateur CR2 est quant à elle égale à la tension U/2 sur l'entrée P (figure 9G).

Au temps t1, le signal de commande F1 passe de l'unité à zéro, le transistor T1 est bloqué et le transistor T3 devient passant comme c'était le cas précédemment. Par ailleurs, la sortie de l'inverseur 52 est maintenue égale à l'unité du fait que, pendant toute l'alternance positive de la tension VS, le signal de commande F2 est maintenu égal à zéro. Parallèlement, le signe du courant alternatif permet de maintenir la sortie du comparateur 61 à zéro. Il s'ensuit que la sortie de l'opérateur booléen « ET » logique 65 est égale à zéro et que le transistor T2 est bloqué. Les seconds moyens de commande 61, 65 permettent donc de bloquer le transistor T2, ce qui empêche la circulation du courant issu de la décharge du condensateur CR2. Le condensateur CR2 reste donc chargée (figure 9G) et la tension aux bornes de la diode D1 est maintenue égale à zéro (figure 9E). C'est donc la diode D2 qui supporte l'ensemble de la tension U/2 de l'entrée P lorsque le transistor T3 est passant (figure 9F).

Comme précédemment, au temps t2, le signal de commande F1 passe de zéro à l'unité, le transistor T1 devient passant et le transistor T3 se bloque. Le courant est dérivé dans la diode D2.

Au temps t2, le courant alternatif IS circule dans les diodes D1 et D2 (figures 9E).

L'utilisation de l'unité de commande CD2 représentée à la figure 5, en particulier des seconds moyens de commande 61, 62, 65, 66 de ladite unité de commande, permet de limiter le courant IT3, IT2 circulant dans le transistor T3, T2 en empêchant la décharge du condensateur CR2, CR3. De ce fait, le transistor T3 n'a pas besoin d'être surdimensionné pour supporter un courant auquel se rajouterait un courant de décharge du condensateur CR2, CR3.

En référence aux chronogrammes des figures 10A à 10L, le fonctionnement du dispositif convertisseur représenté sur la figure 6 ou sur la figure 7 est décrit dans ce qui suit. Notons que ces chronogrammes s'étendent sur une durée pendant laquelle la tension et le courant alternatif VS, IS peuvent être considérés comme continus. La description qui suit se limite au fonctionnement lors des alternances positives de la tension alternative VS, c'est à dire essentiellement au fonctionnement de l'unité de commutation UC1 et du circuit d'aide à la commutation A1. Le fonctionnement du dispositif convertisseur lors des alternances négatives de la tension alternative VS est facilement dérivable par l'homme du métier. La description qui suit est réalisée pour le cas où la tension alternative VS et le courant alternatif IS sont de même signe, c'est-à-dire lorsque le circuit d'aide à la commutation est utilisé pour obtenir une commutation douce des transistors principaux T1, T4. De surcroît, la description qui suit s'applique au mode redresseur du dispositif convertisseur, c'est-à-dire au mode de fonctionnement DC/AC, et ceci dans le cas où l'intensité du courant alternatif IS est suffisante pour obtenir une conduction naturelle des transistors T1, T4. En d'autres termes, le fonctionnement décrit ci-après exclut, dans une certaine mesure, le mode redresseur pour le début et la fin des alternances de la tension alternative VS.

Au départ, le transistor principal T1 est dans un état amorcé ou passant, ce qui est indiqué par la présence d'un trait gras sur la figure 10B. Le transistor auxiliaire TX1 est quant à lui dans un état bloqué, ce qui est indiqué par l'absence de trait gras sur la figure 10C. Comme cela est visible sur la figure long, la diode DC2 est bloquée. Le transistor T1 voit passer un courant IT1, représenté sur la figure 10F, sensiblement égal au courant alternatif IS. La tension V1 aux bornes du transistor T1 est de ce fait sensiblement égale à zéro, et la tension VCR2 aux bornes du condensateur CR2 est sensiblement égale à la tension U/2 sur l'entrée P (figure 10E). La diode DA2 ne voit passer aucun courant comme cela est représenté à la figure 10H et se trouve à l'état bloqué. La tension VDA2 à ses bornes représentée à la figure 10I est donc sensiblement égale à la valeur de la tension U/2 sur l'entrée P.

Au temps t1, le transistor T1 est bloqué (Figure 10B), le courant alternatif IS est dérivé dans le condensateur CR2. La tension V1 aux bornes du transistor principal T1 commence à augmenter progressivement en déchargeant le condensateur CR2, comme cela est visible sur la figure 10E. La diode DA2 est toujours à l'état bloqué, et la tension VDA2 à ses bornes commence à diminuer (figure 10I) jusqu'à atteindre une valeur nulle. En même temps, comme cela est visible sur la figure 10L, la tension VTX1 aux bornes du transistor auxiliaire TX1 augmente jusqu'à la valeur de la tension U/2 sur l'entrée P.

Au temps t2, la tension VCR2 aux bornes du condensateur CR2 atteint la valeur de la tension de référence (Figure 10E), et la diode DC2 se met à conduire un courant IDC2 dont la valeur est sensiblement égale à la valeur du courant IS représenté sur la Figure 10G.

Au temps t3, le transistor auxiliaire TX1 est amorcé (Figure 10C), ce qui va entraîner une décroissance du courant IDC2 dans la diode DC2 (Figure 10G) qui est dévié vers le transistor auxiliaire TX1 qui est devenu passant. Comme cela est visible sur la figure 10J, le transistor auxiliaire TX1 voit donc un courant ITX1 qui augmente progressivement. Ainsi, le courant IRP dans le transformateur TP, représenté sur la figure 10D, va augmenter en même temps que le courant IDC2 diminue. Après un amorçage de la diode DA2, ce courant IRP résulte de la somme du courant ITX1 dans le premier enroulement 71 du transformateur TP (figure 10J) et du courant IDA2 dans le second enroulement 73 de ce même transformateur TP (figure 10H). Dès que la diode DA2 est amorcée, la tension U/2 sur l'entrée P est appliquée aux deux enroulements 71, 73 du transformateur TP. A cause des fuites magnétiques de ce transformateur, l'enroulement 73 sera soumis à une tension à ses bornes sensiblement égale à la tension U/2 sur l'entrée P. Le rapport de transformation du transformateur TP étant très proche de l'unité, le courant ITX1 dans l'enroulement 71 représenté sur la figure 10J et le courant IDA2 dans l'enroulement 73 représenté à la figure 10H sont sensiblement égaux à la moitié de la valeur du courant IRP entrant dans le transformateur TP, c'est-à-dire égaux à la moitié du courant alternatif IS.

Au temps t4, aucun courant ne circule plus dans la diode DC2, ce qui entraîne son blocage (figure 10G). La tension V2 aux bornes du condensateur CR2 (figure 10E), commence donc à augmenter par un phénomène de résonnance avec le transformateur TP. En même temps, comme cela est visible sur les figures 10D, 10H, et 10J, le courant IRP à l'entrée du transformateur TP ainsi que les courants IDA2 et ITX1 dans chaque enroulement vont augmenter. De cette façon, le courant IRP dans le transformateur va entrer en résonance. En effet, au temps t4, le condensateur CR2 qui est déchargé va se charger au fur et à mesure que la tension V2 à ses bornes augmente jusqu'à la tension de l'entrée P.

Entre les temps t4 et t5, lorsque la tension V2 aux bornes du condensateur CR2 est sensiblement égale à la moitié de la tension U/2 sur l'entrée P, le courant IRP entrant dans le transformateur TP va atteindre un pic de résonance (figures 10D et 10E). Pendant ce laps de temps, la tension aux bornes de l'enroulement 71 du transformateur TP va diminuer et la tension aux bornes de l'enroulement 73 de ce même transformateur va augmenter. En d'autres termes, à cause de la variation de la tension V2, la tension U/2 sur l'entrée P va simultanément basculer de l'enroulement 71 à l'enroulement 73.

Au temps t5, alors que la tension V2 aux bornes du condensateur CR2 est égale à la tension U/2 sur l'entrée P (figure 10E), un faible courant va circuler dans la diode D1 montée en inverse parallèlement au transistor T1. Ceci est visible sur la figure 10F représentant le courant IT1 circulant dans le module constitué par le transistor principal T1 et la diode D1. Le transistor principal T1 est amorcé entre le temps t5 et le temps t6, avec une tension à ses bornes qui est donc sensiblement égale à zéro (figure 10E). Ainsi, l'énergie dissipée lors de cet amorçage s'en trouve minimisée.

Au temps t6, le courant IT1 dans le transistor principal T1 augmente progressivement (figure 10F) en même temps l'intensité des courants ITX1 et IDA2 respectivement dans le premier et le second enroulement 71, 73 diminuent (figures 10J et 10H).

Au temps t7, aucun courant ne circule plus dans la diode DA2 et dans le second enroulement 73 du transformateur TP (figure 10H), ce qui entraîne le blocage de ladite diode. Un courant de faible intensité IMAG représenté à la figure 10J, dû à la magnétisation du transformateur TP, continue de circuler dans le transistor TX1 ainsi que dans le premier enroulement 71 dudit transformateur. Entre le temps t7 et le temps t8, les tensions aux bornes des enroulements 71, 73 du transformateur TP étant sensiblement égales à zéro, la valeur de ce courant IMAG reste sensiblement constante.

Au temps t8, le transistor TX1 est commandé dans un état bloqué (Figure 10C) et la diode DX2 permet d'évacuer complètement le courant de magnétisation IMAG circulant dans le premier enroulement 71. Ainsi une démagnétisation complète du transformateur TP se produit avant le blocage principal du transistor principal T1. Comme cela est visible sur la figure 10L, la valeur de la tension aux bornes du transistor TX1 est sensiblement égale à la tension U/2 sur l'entrée P. Comme cela est visible sur la figure 10I, la tension aux bornes de la diode DA2 est, quant à elle, sensiblement égale à deux fois la valeur de la tension U/2 sur l'entrée P. Ainsi, pendant la démagnétisation du transformateur TP, la tension VTX1 aux bornes du transistor auxiliaire TX1 est deux fois plus faible que la tension VDA2 aux bornes de la diode DA2. C'est donc la diode DA2 qui encaisse une tension de démagnétisation importante à la place du transistor auxiliaire TX1, ce qui permet de choisir un transistor TX1 de moindre calibre, donc moins coûteux et fonctionnant avec une consommation énergétique plus faible.

Au temps t9, le transformateur TP est complètement démagnétisé, c'est-à-dire que la valeur moyenne de la tension à ses bornes est nulle. De ce fait, le courant IMAG devient nul, et la diode DX2 se bloque. Ainsi on retrouve la situation initiale précédant le temps t1.

En référence aux chronogrammes des figures 11A à 11K, le fonctionnement en mode redresseur du dispositif convertisseur représenté sur la figure 6 ou sur la figure 7, c'est-à-dire le mode de fonctionnement DC/AC dudit convertisseur, est décrit dans ce qui suit, dans le cas où l'intensité du courant alternatif IS n'est pas suffisante pour obtenir une conduction naturelle des transistors T1, T4. Le fonctionnement décrit ci-après est donc applicable au début et à la fin de l'alternance du courant alternatif IS. Notons que ces chronogrammes s'étendent sur une durée pendant laquelle la tension et le courant alternatif VS, IS peuvent être considérés comme continus. La description qui suit se limite au fonctionnement lors des alternances positives de la tension alternative VS, le fonctionnement lors des alternances négatives de ladite tension alternative VS étant facilement dérivable par l'homme du métier.

Au départ, le transistor T1 est amorcé ou passant, comme cela est visible sur la figure 11A. Le transistor T1 conduit un courant IT1 représenté sur la figure 11E dont la valeur est sensiblement égale à celle du courant alternatif IS. Comme cela est visible sur les figures 11D et 11F, la valeur de la tension VCR2 aux bornes du condensateur CR2 est quasiment nulle et la diode DC2 est dans un état bloqué.

Au temps t1, le transistor principal T1 passe de l'état passant à l'état bloqué (Figure 11A), et le courant alternatif IS est dérivé dans le condensateur CR2. La tension VCR2 aux bornes du condensateur CR2 commence à diminuer progressivement en déchargeant le condensateur CR2, et la tension V1 aux bornes du transistor principal T1 augmente progressivement, comme cela est visible sur la figure 11D. L'intensité du courant alternatif IS étant trop faible, la tension V1 aux bornes du transistor T1 augmente très lentement et ne parvient pas à atteindre la valeur de la tension U/2 sur l'entrée P. De ce fait, la diode DC2 ne peut pas être amorcée et ne conduit donc pas (figure 11F).

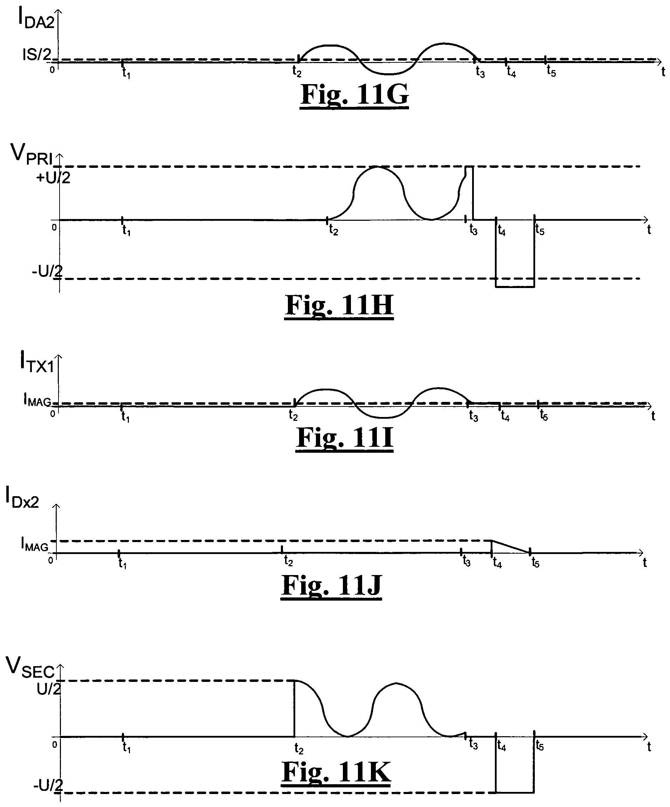

Au temps t2, le transistor auxiliaire TX1 est amorcé (Figure 11B). Comme cela est visible sur la figure 11I, le transistor auxiliaire TX1 voit donc un courant ITX1 qui augmente progressivement. De la même façon, le courant IRP dans le transformateur TP (figure 11C) et le courant IDA2 dans la diode DA2 (figure 11 G) augmentent. Le courant IRP dans le transformateur TP va ensuite entrer dans une phase de résonance. En effet, le condensateur CR2 qui est initialement chargé va se décharger au fur et à mesure que la tension V1 aux bornes du transistor principal T1 diminue jusqu'à zéro. Le courant IRP dans le transformateur TP va ensuite atteindre un pic de résonance (figure 11C), qui va se poursuivre par une baisse. Comme cela est visible sur les figures 11C, 11D, 11G, 11H, 11I et 11K, la phase de résonance se traduit par des oscillations sans que la tension V1 aux bornes du transistor principal T1 ne puisse s'annuler. Le transistor T1 ne peut donc pas s'amorcer du fait que les sorties du comparateur 81 et de l'opérateur booléen « ET » logique 83 de l'unité de commande CD2 reste dans un état inactif.

Au temps t3, après le laps de temps TMAX défini par le module de retard 91 des moyens de commande CD2, le transistor principal T1 est amorcé automatiquement (figure 11 A), du fait que la sortie de l'opérateur booléen « OU » logique 93 passe dans un état actif. En même temps, la tension V1 aux bornes du transistor principal T1 est brutalement ramenée vers zéro (Figure 11D), ce qui génère un pic de courant dans le transistor principal T1 (Figure 11 E). Le courant IRP décroît (Figure 11C) et la diode DA2 se retrouve dans un état bloqué (Figure 11G). Seul, un courant magnétisant IMAG circule dans le transistor TX1 (Figure 11I).

Au temps t4, après une durée TMAX' définie par le module 95 de l'unité de commande CD2 et habituellement supérieure au temps TMAX, le transistor auxiliaire TX1 est bloqué (Figure 11B). La diode DX2 permet d'obtenir une démagnétisation complète du transformateur TP au temps t5 (Figures 11H, 11I et 11 J).

Au temps t5, le transformateur TP est complètement démagnétisé. De ce fait, le courant IMAG devient nul, et la diode DX2 se bloque (figure 11J). Ainsi on retrouve la situation initiale précédant le temps t1.

Les dispositifs convertisseurs décrits précédemment peuvent être utilisés dans une alimentation sans interruption 501 telle que celle représentée à la figure 12. Cette alimentation sans interruption comprend une entrée d'alimentation 502 sur laquelle est appliquée une tension d'entrée variable d'un premier réseau triphasé. L'alimentation sans interruption comprend un redresseur 503, ledit redresseur étant connecté entre, d'un côté, l'entrée d'alimentation 502 et, de l'autre côté, deux lignes de sortie 504 ou bus de tension sensiblement continue. L'alimentation sans interruption comprend un onduleur 506 correspondant à l'un des dispositifs convertisseurs décrit précédemment, ledit onduleur étant connecté entre les lignes de sortie 504 et une sortie 507 destiné à fournir une tension alternative triphasée sécurisée à une charge 508. Le bus de tension continue 504 est également connecté à une batterie 509 par l'entremise d'un convertisseur DC/DC 510.

Comme cela est visible sur la figure 12, des contacteurs statiques 511 et 512 permettent de sélectionner entre l'entrée d'alimentation 502 du premier réseau triphasé et une entrée d'alimentation 513 d'un second réseau également triphasé. Ainsi, il est possible d'alimenter la charge par l'intermédiaire du premier réseau sécurisé par l'alimentation sans interruption 501, et le cas échéant commuter sur le second réseau.

## Revendications

1. Dispositif convertisseur permettant de fournir une tension (VS) et un courant (IS) alternatifs par fltrage d'impulsions obtenues sur une sortie de signal modulé (SM) à partir de trois tensions (-U/2, UREF, U/2) sensiblement continues disponibles sur une ligne de tension de référence (REF) et sur deux entrées (P, N) de tension de signes opposés,
ledit dispositif comprenant deux unités de commutation (UC1, UC4) connectées entre ladite ligne de tension de référence et respectivement l'une et l'autre des dites entrées, chaque unité de commutation comprenant des premiers moyens de commutation (T1, T4) connectés entre l'entrée à laquelle ladite unité de commutation est connectée et une sortie de commutation (S1, S4) de ladite unité de commutation pour fournir des impulsions ayant un même signe que celui de la tension disponible sur ladite entrée par conductions et blocages principaux desdits premiers moyens de commutation,
ledit dispositif comprenant pour chaque unité de commutation des seconds moyens de commutation (T2, T3) associés à ladite unité de commutation et connectés entre ladite unité de commutation et ladite sortie de signal modulé, et des premiers moyens de commande (51, 52) agissant sur lesdits seconds moyens de commutation pour établir une conduction desdits seconds moyens de commutation lorsque le signe de ladite tension alternative est le même que celui de la tension sur l'entrée (P, N) à laquelle ladite unité de commutation est connectée,
**caractérisé en ce que** ledit dispositif comprend pour chaque unité de commutation un circuit d'aide à la commutation (A1, A4) de ladite unité de commutation connecté entre l'entrée à laquelle ladite unité de commutation est connectée et la sortie de commutation de ladite unité de commutation pour établir, avant toute conduction principale des premiers moyens de commutation de ladite unité de commutation, une tension de commutation desdits premiers moyens de commutation sensiblement égale à zéro,
**en ce que** ledit dispositif comprend pour chaque unité de commutation des seconds moyens de commande agissant sur les seconds moyens de commutation associés à l'unité de commutation qui est connectée à l'entrée de tension (P, N) de même signe que celui de ladite tension alternative pour établir, lorsque ladite tension alternative et ledit courant alternatif sont de signes opposés, un blocage desdits seconds moyens de commutation,
**en ce que** chaque unité de commutation (UC1, UC4) comprend, en outre, une diode (DC2, DC3) connectée entre la ligne de tension de référence (REF) et la sortie de commutation (S1, S4) de ladite unité de commutation, pour établir sur ladite sortie de commutation, lors du blocage principal, une tension égale à ladite tension de référence, et **caractérisé en ce que** le circuit d'aide à la commutation (A1, A4) de chaque unité de commutation (UC1, UC4) comporte des moyens inductifs, des moyens de dérivation d'un courant (IRP, IRN) de la sortie de commutation (S1, S4) pour dériver ledit courant vers lesdits moyens inductifs avant la conduction principal, et des moyens d'accumulation d'énergie (CR2, CR3) montés en parallèle sur la diode (DC2, DC3) de ladite unité de commutation pour établir une résonnance dudit courant (IRP) dans lesdits moyens inductifs avant la conduction principale.

2. Dispositif selon la revendication 1, **caractérisé en ce que** les seconds moyens de commutation (T2, T3) de chaque unité de commutation (UC1, UC4) sont disposés entre la sortie de commutation (S1, S4) de ladite unité de commutation et la sortie de signal modulé (SM).

3. Dispositif selon la revendication 1, **caractérisé en ce que** la sortie de commutation (S1, S4) de chaque unité de commutation (UC1, UC4) est directement connectée à la sortie de signal modulé (SM), et **en ce que** les seconds moyens de commutation (T2, T3) de chaque unité de commutation (UC1, UC4) sont disposés en série entre la diode (DC2, DC3) et ladite sortie de signal modulé (SM).

4. Dispositif selon l'une quelconque des revendications 2 ou 3, caractérisé en ce chaque unité de commutation (UC1, UC4) est commandée à l'aide d'un signal de commande (F1, F2) à modulation de largeur d'impulsion dont l'amplitude est maintenue à une valeur sensiblement égale à zéro lorsque le signe de la tension alternative (VS) est opposé par rapport au signe de la tension sur l'entrée (P, N) à laquelle ladite unité de commande est connectée, et
en ce que les premiers moyens de commande agissant sur les seconds moyens de commutation (T2, T3) associés à l'une des unités de commutation (UC1, UC4) comporte un inverseur (51, 52) connecté entre l'entrée de commande desdits seconds moyens de commutation (T2, T3) et un point d'entrée du signal de commande (F2, F1) de l'autre unité de commutation.

5. Dispositif selon la revendication 4, **caractérisé en ce que** les seconds moyens de commande agissant sur les seconds moyens de commutation (T2, T3) associés à une unité de commutation (UC1, UC4) comportent entre l'entrée de commande desdits seconds moyens de commutation (T2, T3) et le point d'entrée du signal de commande (F2, F1) de l'autre unité de commutation (UC4, UC1):
- des moyens de test (61, 62) du signe du courant alternatif (IS) par rapport à celui de la tension sur l'entrée (P, N) à laquelle est connectée ladite première unité de commutation, et
- un opérateur booléen « ET » logique (65, 66) pourvu de deux entrées connectées à une sortie de l'inverseur (51, 52) des premiers moyens de commande desdits seconds moyens de commutation et à une sortie desdits moyens de test (61, 62) et d'une sortie pour établir un blocage desdits seconds moyens de commutation lorsque ledit courant alternatif est de signe opposé par rapport à celui de la tension sur l'entrée (P, N) à laquelle est connectée ladite première unité de commutation.

6. Dispositif selon l'une quelconque des revendications 1 à 5, **caractérisée en ce que** les moyens inductifs du circuit d'aide à la commutation (A1, A4) de chaque unité de commutation sont essentiellement constitués par un transformateur (TP, TN) connecté à la sortie de commutation de ladite unité de commutation et comportant des enroulements bobinés en inverse, et **en ce que** lesdits moyens de dérivation comportent des moyens de commutation auxiliaires (TX1, TX4) directement connectés entre lesdits moyens inductifs et l'entrée de tension (P, N) à laquelle ladite unité de commutation est connectée.

7. Dispositif selon la revendication 6, **caractérisé en ce que** le transformateur (TP, TN) du circuit d'aide à la commutation (A1, A4) de chaque unité de commutation (UC1, UC4) comporte :
- un premier enroulement (71, 72) connecté entre la sortie de commutation (S1, S4) de ladite unité de commutation et les moyens de dérivation (TX1, TX4) dudit circuit d'aide à la commutation, et
- un second enroulement (73, 74) couplé magnétiquement au dit premier enroulement et connecté entre ladite sortie de commutation et la ligne de tension de référence (REF).

8. Dispositif selon l'une des revendications 6 ou 7, **caractérisé en ce que** le transformateur (TP, TN) présente un rapport de transformation inférieur à l'unité.

9. Dispositif selon l'une quelconque des revendications 7 ou 8, **caractérisé en ce que** le circuit d'aide à la commutation (A1, A4) de chaque unité de commutation (UC1, UC4) comporte au moins une première diode anti-retour (DX2, DX3) connectée entre le premier enroulement (71, 72) et la ligne de tension de référence (REF).

10. Dispositif selon la revendication 9, **caractérisé en ce que** le circuit d'aide à la commutation (A1, A4) de chaque unité de commutation (UC1, UC4) comporte une seconde diode anti-retour (DA2, D3) connectée entre le second enroulement (73, 74) et la ligne de tension de référence (REF).

11. Dispositif selon l'une quelconque des revendications 6 à 10, **caractérisé en ce que** ledit dispositif comporte des troisièmes moyens de commande agissant sur les premiers moyens de commutation (T1, T4) de chaque unité de commutation (UC1, UC4), lesdits troisièmes moyens de commande étant connectés entre le point d'entrée du signal de commande (F1, F2) à modulation de largeur d'impulsion de ladite unité de commutation et l'entrée de commande desdits premiers moyens de commutation (T1, T4), lesdits troisièmes moyens de commande permettant de commander une succession de conductions et de blocages principaux desdits premiers moyens de commutation à partir dudit signal de commande (F1, F2), lesdits troisièmes moyens de commande comportant un module de retard (91, 92) conçu pour établir une conduction principal retardée après une durée supérieure à une durée prédéterminée (TMAX).

12. Dispositif selon l'une quelconque des revendications 11, **caractérisé en ce que** ledit dispositif comporte des quatrièmes moyens de commande agissant sur les moyens de commutation auxiliaires (TX1, TX4) du circuit d'aide à la commutation de chaque unité de commutation (UC1, UC4), lesdits quatrième moyens de commande étant connectés entre le point d'entrée du signal de commande (F1, F2) à modulation de largeur d'impulsion de ladite unité de commutation et l'entrée de commande desdits moyens de commutation auxiliaires (TX1, TX4), lesdits quatrième moyens de commande comportant un module (95, 96) conçu pour établir une conduction desdits moyens de commutation auxiliaires pendant une durée prédéfinie (TMAX').

13. Alimentation sans interruption (301) comprenant une entrée d'alimentation (302) sur laquelle est appliquée une tension d'entrée alternative, un redresseur (303) connecté à ladite entrée, deux lignes de tension sensiblement continue de signes opposés connectées en sortie dudit redresseur, un onduleur (306) connecté aux dites lignes de tension de tension sensiblement continue et comportant une sortie (307) destinée à fournir une tension sécurisée, **caractérisée en ce que** ledit onduleur est un dispositif convertisseur selon l'une des revendications précédentes et fournit à partir des tensions sensiblement continues une tension sécurisée alternative.

## Patentansprüche

1. Wandlervorrichtung, die es ermöglicht, eine Wechselspannung (VS) und einen Wechselstrom (IS) durch Filterung von Impulsen zu liefern, die an einem Ausgang eines modulierten Signals (SM) ausgehend von drei Spannungen (-U/2, UREF, U/2), die im Wesentlichen Gleichspannungen sind, erhalten werden, die an einer Referenzspannungsleitung (REF) und an zwei Spannungseingängen (P, N) mit entgegengesetzten Vorzeichen zur Verfügung stehen, wobei die Vorrichtung zwei Schalteinheiten (UC1, UC4) umfasst, die zwischen die Referenzspannungsleitung und den einen bzw. den anderen der Eingänge geschaltet sind, wobei jede Schalteinheit erste Schaltmittel (T1, T4) umfasst, die zwischen den Eingang, mit dem die Schalteinheit verbunden ist, und einen Schaltausgang (S1, S4) der Schalteinheit geschaltet sind, um durch Haupt-Leitungs-und Sperrzustände der ersten Schaltmittel Impulse zu liefern, die dasselbe Vorzeichen wie die am jeweiligen Eingang verfügbare Spannung haben, wobei die Vorrichtung für jede Schalteinheit zweite Schaltmittel (T2, T3), die der Schalteinheit zugeordnet sind und zwischen die Schalteinheit und den Ausgang des modulierten Signals geschaltet sind, und erste Steuerungsmittel (51, 52), die auf die zweiten Schaltmittel einwirken, um einen Leitungszustand der zweiten Schaltmittel herzustellen, wenn das Vorzeichen der Wechselspannung dasselbe wie das der Spannung an dem Eingang (P, N) ist, mit dem die Schalteinheit verbunden ist, umfasst,
**dadurch gekennzeichnet, dass** die Vorrichtung für jede Schalteinheit einen Schalthilfskreis (A1, A4) der Schalteinheit umfasst, der zwischen den Eingang, mit dem die Schalteinheit verbunden ist, und den Schaltausgang der Schalteinheit geschaltet ist, um vor jedem Haupt-Leitungszustand der ersten Schaltmittel der Schalteinheit eine Schaltspannung der ersten Schaltmittel herzustellen, die im Wesentlichen gleich null ist, dadurch, dass die Vorrichtung für jede Schalteinheit zweite Steuerungsmittel umfasst, die auf die zweiten Schaltmittel einwirken, die der Schalteinheit zugeordnet sind, welche mit dem Spannungseingang (P, N) mit demselben Vorzeichen wie die Wechselspannung verbunden ist, um, wenn die Wechselspannung und der Wechselstrom entgegengesetzte Vorzeichen haben, einen Sperrzustand der zweiten Schaltmittel herzustellen, dadurch, dass jede Schalteinheit (UC1, UC4) außerdem eine Diode (DC2, DC3) umfasst, die zwischen die Referenzspannungsleitung (REF) und den Schaltausgang (S1, S4) der Schalteinheit geschaltet ist, um an dem Schaltausgang während des Haupt-Sperrzustands eine Spannung herzustellen, die gleich der Referenzspannung ist, und **dadurch gekennzeichnet, dass** der Schalthilfskreis (A1, A4) jeder Schalteinheit (UC1, UC4) induktive Mittel, Mittel zur Ableitung eines Stroms (IRP, IRN) von dem Schaltausgang (S1, S4), um vor dem Haupt-Leitungszustand den Strom zu den induktiven Mitteln abzuleiten, und Energiespeicherungsmittel (CR2, CR3), die zu der Diode (DC2, DC3) der Schalteinheit parallelgeschaltet sind, um vor dem Haupt-Leitungszustand eine Resonanz des Stroms (IRP) in den induktiven Mitteln herzustellen, aufweist.

2. Vorrichtung nach Anspruch 1, **dadurch gekennzeichnet, dass** die zweiten Schaltmittel (T2, T3) jeder Schalteinheit (UC1, UC4) zwischen dem Schaltausgang (S1, S4) der Schalteinheit und dem Ausgang des modulierten Signals (SM) angeordnet sind.

3. Vorrichtung nach Anspruch 1, **dadurch gekennzeichnet, dass** der Schaltausgang (S1, S4) jeder Schalteinheit (UC1, UC4) direkt mit dem Ausgang des modulierten Signals (SM) verbunden ist, und dadurch, dass die zweiten Schaltmittel (T2, T3) jeder Schalteinheit (UC1, UC4) zwischen die Diode (DC2, DC3) und den Ausgang des modulierten Signals (SM) in Reihe geschaltet sind.

4. Vorrichtung nach einem der Ansprüche 2 oder 3, **dadurch gekennzeichnet, dass** jede Schalteinheit (UC1, UC4) mithilfe eines Steuersignals (F1, F2) mit Pulsweitenmodulation gesteuert wird, dessen Amplitude bei einem Wert gehalten wird, der im Wesentlichen gleich null ist, wenn das Vorzeichen der Wechselspannung (VS) entgegengesetzt zum Vorzeichen der Spannung an dem Eingang (P, N) ist, mit welchem die Steuereinheit verbunden ist, und dadurch, dass die ersten Steuerungsmittel, die auf die zweiten Schaltmittel (T2, T3) einwirken, die einer der Schalteinheiten (UC1, UC4) zugeordnet sind, einen Inverter (51, 52) aufweisen, der zwischen den Steuereingang der zweiten Schaltmittel (T2, T3) und einen Eingangspunkt des Steuersignals (F2, F1) der anderen Schalteinheit geschaltet ist.

5. Vorrichtung nach Anspruch 4, **dadurch gekennzeichnet, dass** die zweiten Steuerungsmittel, die auf die zweiten Schaltmittel (T2, T3) einwirken, die einer Schalteinheit (UC1, UC4) zugeordnet sind, zwischen dem Steuereingang der zweiten Schaltmittel (T2, T3) und dem Eingangspunkt des Steuersignals (F2, F1) der anderen Schalteinheit (UC4, UC1) aufweisen:
- Mittel zur Prüfung (61, 62) des Vorzeichens des Wechselstroms (IS) im Vergleich zu demjenigen der Spannung an dem Eingang (P, N), mit dem die erste Schalteinheit verbunden ist, und
- einen Booleschen Operator "UND" (65, 66), der mit zwei Eingängen versehen ist, die mit einem Ausgangs des Inverters (51, 52) der ersten Steuerungsmittel der zweiten Schaltmittel und mit einem Ausgang der Prüfmittel (61, 62) verbunden sind, und mit einem Ausgang zum Herstellen eines Sperrzustands der zweiten Schaltmittel, wenn der Wechselstrom ein Vorzeichen hat, das zu demjenigen der Spannung an dem Eingang (P, N), mit dem die erste Schalteinheit verbunden ist, entgegengesetzt ist.

6. Vorrichtung nach einem der Ansprüche 1 bis 5, **dadurch gekennzeichnet, dass** die induktiven Mittel des Schalthilfskreises (A1, A4) jeder Schalteinheit im Wesentlichen aus einem Transformator (TP, TN) bestehen, der mit dem Schaltausgang der Schalteinheit verbunden ist und entgegengesetzt gewickelte Wicklungen aufweist, und dadurch, dass die Mittel zur Ableitung Hilfsschaltmittel (TX1, TX4) aufweisen, die direkt zwischen die induktiven Mittel und den Spannungseingang (P, N), mit dem die Schalteinheit verbunden ist, geschaltet sind.

7. Vorrichtung nach Anspruch 6, **dadurch gekennzeichnet, dass** der Transformator (TP, TN) des Schalthilfskreises (A1, A4) jeder Schalteinheit (UC1, UC4) aufweist:
- eine erste Wicklung (71, 72), die zwischen den Schaltausgang (S1, S4) der Schalteinheit und die Mittel zur Ableitung (TX1, TX4) des Schalthilfskreises geschaltet ist, und
- eine zweite Wicklung (73, 74), die mit der ersten Wicklung magnetisch gekoppelt ist und zwischen den Schaltausgang und die Referenzspannungsleitung (REF) geschaltet ist.

8. Vorrichtung nach einem der Ansprüche 6 oder 7, **dadurch gekennzeichnet, dass** der Transformator (TP, TN) ein Wicklungsverhältnis aufweist, das kleiner als eins ist.

9. Vorrichtung nach einem der Ansprüche 7 oder 8, **dadurch gekennzeichnet, dass** der Schalthilfskreis (A1, A4) jeder Schalteinheit (UC1, UC4) wenigstens eine erste Rücklaufsperrdiode (DX2, DX3) aufweist, die zwischen die erste Wicklung (71, 72) und die Referenzspannungsleitung (REF) geschaltet ist.

10. Vorrichtung nach Anspruch 9, **dadurch gekennzeichnet, dass** der Schalthilfskreis (A1, A4) jeder Schalteinheit (UC1, UC4) eine zweite Rücklaufsperrdiode (DA2, DA3) aufweist, die zwischen die zweite Wicklung (73, 74) und die Referenzspannungsleitung (REF) geschaltet ist.

11. Vorrichtung nach einem der Ansprüche 6 bis 10, **dadurch gekennzeichnet, dass** die Vorrichtung dritte Steuerungsmittel aufweist, die auf die ersten Schaltmittel (T1, T4) jeder Schalteinheit (UC1, UC4) einwirken, wobei die dritten Steuerungsmittel zwischen den Eingangspunkt des Steuersignals (F1, F2) mit Pulsweitenmodulation der Schalteinheit und den Steuerungseingang der ersten Schaltmittel (T1, T4) geschaltet sind, wobei die dritten Steuerungsmittel ermöglichen, eine Folge von Haupt-Leitungs- und Sperrzuständen der ersten Schaltmittel ausgehend von dem Steuersignal (F1, F2) zu steuern, wobei die dritten Steuerungsmittel ein Verzögerungsmodul (91, 92) aufweisen, das dafür ausgelegt ist, einen verzögerten Haupt-Leitungszustand nach einer Dauer, die größer als eine vorbestimmte Dauer (TMAX) ist, herzustellen.

12. Vorrichtung nach einem der Ansprüche 11, **dadurch gekennzeichnet, dass** die Vorrichtung vierte Steuerungsmittel aufweist, die auf die Hilfsschaltmittel (TX1, TX4) des Schalthilfskreises jeder Schalteinheit (UC1, UC4) einwirken, wobei die vierten Steuerungsmittel zwischen den Eingangspunkt des Steuersignals (F1, F2) mit Pulsweitenmodulation der Schalteinheit und den Steuerungseingang der Hilfsschaltmittel (TX1, TX4) geschaltet sind, wobei die vierten Steuerungsmittel ein Modul (95, 96) aufweisen, das dafür ausgelegt ist, einen Leitungszustand der Hilfsschaltmittel während einer vordefinierten Dauer (TMAX') herzustellen.

13. Unterbrechungsfreie Stromversorgung (301), welche einen Stromversorgungseingang (302), an welchen eine Eingangswechselspannung angelegt wird, einen Gleichrichter (303), der mit diesem Eingang verbunden ist, zwei Leitungen mit Spannungen, die im Wesentlichen Gleichspannung sind, mit entgegengesetzten Vorzeichen, die mit dem Ausgang des Gleichrichters verbunden sind, einen Wechselrichter (306), der mit den Leitungen mit Spannungen, die im Wesentlichen Gleichspannung sind, verbunden ist und einen Ausgang (307) aufweist, der dazu bestimmt ist, eine abgesicherte Spannung zu liefern, umfasst, **dadurch gekennzeichnet, dass** der Wechselrichter eine Wandlervorrichtung nach einem der vorhergehenden Ansprüche ist und ausgehend von den Spannungen, die im Wesentlichen Gleichspannung sind, eine abgesicherte Wechselspannung liefert.

## Claims

1. Converter device for the delivery of an alternating voltage (VS) and current (IS) by the filtering of pulses obtained on a modulated signal output (SM), on the basis of three substantially direct voltages (-U/2, UREF, U/2) which are available on a reference voltage line (REF) and on two voltage inputs (P, N) of opposing polarities,
wherein said device comprises two switching units (UC1, UC4) connected between said reference voltage line and one or other of said inputs respectively, wherein each switching unit comprises first switching means (T1, T4) connected between the input to which said switching unit is connected and a switching output (S1, S4) of said switching unit, for the delivery of pulses having the same polarity as that of the available voltage on said input, by means of the primary conduction and blocking functions of said first switching means,
wherein said device comprises, for each switching unit, second switching means (T2, T3) associated with said switching unit and connected between said switching unit and said modulated signal output, and first control means (51, 52) acting on said second switching means for the establishment of the conduction of said second switching means where the polarity of said alternating voltage is the same as that of the voltage on the input (P, N) to which said switching unit is connected,
**characterized in that** said device comprises, for each switching unit, a snubber circuit (A1, A4) for said switching unit, connected between the input to which said switching unit is connected and the switching output of said switching unit, for the establishment, prior to any primary conduction on the first switching means of said switching unit, of a switching voltage on said first switching means which is substantially equal to zero,
and **in that** said device comprises, for each switching unit, second control means acting on the second switching means associated with the switching unit which is connected to the voltage input (P, N) of the same polarity as that of said alternating voltage, for the establishment, when said alternating voltage and said alternating current are of opposing polarities, of the blocking of said second switching means,
and **in that** each switching unit (UC1, UC4) moreover comprises a diode (DC2, DC3), which is connected between the reference voltage line (REF) and the switching output (S1, S4) of said switching unit, for the establishment on said switching output, during primary blocking, of a voltage which is equal to said reference voltage,
and **characterized in that** the snubber circuit (A1, A4) of each switching unit (UC1, UC4) comprises inductive means, means for the tap-off of a current (IRP, IRN) on the switching output (S1, S4) for the diversion of said current to said inductive means in advance of primary conduction, and energy accumulation means (CR2, CR3) arranged in parallel with the diode (DC2, DC3) of said switching unit, for the establishment of the resonance of said current (IRP) in said inductive means, in advance of primary conduction.

2. Device according to Claim 1, **characterized in that** the second switching means (T2, T3) of each switching unit (UC1, UC4) are arranged between the switching output (S1, S4) of said switching unit and the modulated signal output (SM).

3. Device according to Claim 1, **characterized in that** the switching output (S1, S4) of each switching unit (UC1, UC4) is directly connected to the modulated signal output (SM), and **in that** the second switching means (T2, T3) of each switching unit (UC1, UC4) are arranged in series between the diode (DC2, DC3) and said modulated signal output (SM).

4. Device as claimed in one of Claims 2 or 3, **characterized in that** each switching unit (UC1, UC4) is controlled by means of a pulse-width modulated control signal (F1, F2), the amplitude of which is maintained at a value which is substantially equal to zero when the polarity of the alternating voltage (VS) is in opposition to the polarity of the voltage on the input (P, N) to which said control unit is connected,
and **in that** the first control means acting on the second switching means (T2, T3), associated with one of the switching units (UC1, UC4), comprise an inverter (51, 52) connected between the control input of said second switching means (T2, T3) and a point of input of the command signal (F2, F1) to the other switching unit.

5. Device according to Claim 4, **characterized in that** the second control means acting on the second switching means (T2, T3), associated with a switching unit (UC1, UC4), comprise the following between the control input of said second switching means (T2, T3) and the point of input of the control signal (F2, F1) to the other switching unit (UC4, UC1):
- test means (61, 62) for the polarity of the alternating current (IS) in relation to that of the voltage on the input (P, N) to which said first switching unit is connected, and
- a Boolean logical operator "AND" (65, 66) having two inputs connected to an output of the inverter (51, 52) of the first control means of said second switching means and an output of said test means (61, 62), and an output for the establishment of the blocking of said second switching means when said alternating current is of opposing polarity to that of the voltage on the input (P, N) to which said first switching unit is connected.

6. Device according to one of Claims 1 to 5, **characterized in that** the inductive means of the snubber circuit (A1, A4) on each switching unit are essentially comprised of a transformer (TP, TN) connected to the switching output of said switching unit and having reverse-wound coil windings, and **in that** said tap-off means are comprised of auxiliary switching means (TX1, TX4), which are directly connected between said inductive means and the voltage input (P, N) to which said switching unit is connected.

7. Device according to Claim 6, **characterized in that** the transformer (TP, TN) on the snubber circuit (A1, A4) of each switching unit (UC1, UC4) comprises:
- a first winding (71, 72) connected between the switching output (S1, S4) of said switching unit and the tap-off means (TX1, TX4) of said snubber circuit, and
- a second winding (73, 74), which is magnetically coupled to the first winding and connected between said switching output and the reference voltage line (REF).

8. Device according to one of Claims 6 or 7, **characterized in that** the transformer (TP, TN) has a transformation ratio of less than one unit.

9. Device according to one of Claims 7 or 8, **characterized in that** the snubber circuit (A1, A4) of each switching unit (UC1, UC4) comprises at least a first non-return diode (DX2, DX3) connected between the first winding (71, 72) and the reference voltage line (REF).

10. Device according to Claim 9, **characterized in that** the snubber circuit (A1, A4) of each switching unit (UC1, UC4) comprises a second non-return diode (DA2, DA3) connected between the second winding (73, 74) and the reference voltage line (REF).

11. Device according to one of Claims 6 to 10, **characterized in that** said device comprises third control means acting on the first switching means (T1, T4) of each switching unit (UC1, UC4), wherein said third control means are connected between the point of input of the pulse-width modulated control signal (F1, F2) on said switching unit and the control input of said first switching means (T1, T4), wherein said third control means permit the control of a succession of primary conduction and blocking operations on said first switching means in response to said control signal (F1, F2), wherein said third control means comprise a delay module (91, 92) which is designed to establish delayed primary conduction upon the expiry of a time interval which exceeds a predetermined duration (TMAX).

12. Device according to Claim 11, **characterized in that** said device comprises fourth control means acting on the auxiliary switching means (TX1, TX4) of the snubber circuit of each switching unit (UC1, UC4), wherein said fourth control means are connected between the point of input of the pulse-width modulated control signal (F1, F2) on said switching unit and the control input of said auxiliary switching means (TX1, TX4), wherein said fourth control means comprise a module (95, 96) which is designed to establish the conduction of said auxiliary switching means for a predetermined time interval (TMAX').

13. Uninterruptible power supply (301) comprising a power supply input (302) to which an alternating input voltage is applied, a rectifier (303) connected to said input, two substantially direct voltage lines of opposing polarities connected at the output of said rectifier, an inverter (306) connected to said substantially direct voltage lines, and comprising an output (307) for the delivery of a secured voltage supply, **characterized in that** said inverter is a converter device according to one of the preceding claims, and delivers a secured alternating voltage supply, sourced from substantially direct voltages.
